(19) Europäisches Patentamt

European Patent Office

Office européen des brevets

(11) **EP 1 010 186 B1**

(12) **FASCICULE DE BREVET EUROPEEN**

(45) Date de publication et mention
de la délivrance du brevet:
**07.04.2004 Bulletin 2004/15**

(21) Numéro de dépôt: **98940000.7**

(22) Date de dépôt: **11.08.1998**

(51) Int Cl.7: **H01C 7/112**

(86) Numéro de dépôt international:
**PCT/CA1998/000769**

(87) Numéro de publication internationale:
**WO 1999/009564 (25.02.1999 Gazette 1999/08)**

(54) **VARISTANCES A BASE DE POUDRES NANOCRISTALLINES PRODUITES PAR BROYAGE MECANIQUE INTENSE**

VARISTOREN AUF BASIS VON DURCH MECHANISCHE ZERKLEINERUNG HERGESTELLTEN NANOKRISTALLPULVERN

VARISTORS BASED ON NANOCRYSTALLINE POWDERS PRODUCED BY MECHANICAL GRINDING

(84) Etats contractants désignés:
**AT BE CH DE DK ES FR GB IT LI NL PT SE**

(30) Priorité: **13.08.1997 CA 2211813**

(43) Date de publication de la demande:
**21.06.2000 Bulletin 2000/25**

(73) Titulaire: **HYDRO-QUEBEC**
**Montréal, Québec H2Z 1A4 (CA)**

(72) Inventeurs:
- **SCHULZ, Robert**
  **Sainte-Julie, Québec J0L 2S0 (CA)**
- **BOILY, Sabin**
  **Chambly, Québec J3L 5M6 (CA)**
- **JOLY, Alain**
  **Saint-Lambert, Québec J4P 2N3 (CA)**
- **VAN NESTE, André**
  **Sainte-Foy, Québec G1W 4B6 (CA)**
- **ALAMDARI, Houshang Résidence universitaire**
  **Sainte-Foy, Québec G1K 7P4 (CA)**

(74) Mandataire: **Barbin le Bourhis, Joel**
**Cabinet Bonnet-Thirion,**
**12, Avenue de la Grande-Armée**
**75017 Paris (FR)**

(56) Documents cités:
**DE-A- 2 651 274          DE-A- 3 335 354**
**US-A- 4 681 717**

- **S. BOYLE ET AL.: "Ball milled ZnO for Varitor applications" PROCEDINGS OF THE INTERNATIONAL SYMPOSIUM ON METASTABLE, MECHANICALLY ALLOYED AND NANOCRYSTALLINE MATERIALS, 20 - 24 mai 1996, pages 993-998, XP002087356 Rome, Italy cité dans la demande**
- **BRANKOVIC Z ET AL: "NANOSTRUCTURED CONSTITUENTS OF ZNO-BASED VARISTORS PREPARED BY MECHANICAL ATTRITION" NANOSTRUCTURED MATERIALS, vol. 4, no. 2, 1 mars 1994, pages 149-157, XP000439859**

**Description**

**DOMAINE TECHNIQUE DE L'INVENTION**

La présente invention a pour objet une nouvelle méthode de fabrication de varistances à base de poudres nanocristallines produites par broyage mécanique intense.

Elle a également pour objet les varistances ainsi fabriquées, qui se distinguent notamment des produits analogues existants en ce qu'elles possèdent une très haute tension de claquage.

**BRÈVE DESCRIPTION DE L'ART ANTÉRIEUR**

Il est connu depuis de très nombreuses années d'utiliser des varistances à base d'oxyde de zinc pour protéger des équipements électriques contre les surtensions.

Ces varistances (aussi connues sous le vocable anglais de "varistors") sont des éléments électriquement "actifs" dont l'impédance varie non linéairement en fonction de la tension appliquée à ses bornes. Ces éléments se présentent habituellement sous la forme de pastilles de 3 à 100 mm de diamètre et de 1 à 30 mm d'épaisseur, qui sont constituées essentiellement d'un matériau fait de grains conducteurs d'oxyde de zinc (ZnO) entourés de joints de grain isolants à base d'oxyde de bismuth ($Bi_2O_3$). Après pressage, ces pastilles sont soumises à un frittage dans un four à des températures comprises entre 1000 et 1500°C pendant plusieurs heures.

À basse tension, les barrières isolantes aux joints de grain empêchent le passage du courant et le matériau agit comme un isolant. Lorsque la tension dépasse une tension donnée dite de claquage ("break down voltage"), la résistance des joints chute rapidement, d'où l'appellation de "varistance" ou "résistance variable". Le matériau devient alors très bon conducteur et le courant peut être acheminé vers une mise à la terre plutôt que d'endommager l'équipement électrique.

De par leur nature, les variances sont principalement employées dans les parafoudres utilisés dans les réseaux de transport et de distribution d'énergie électrique.

Les parafoudres présentement disponibles sur le marché sont habituellement constitués d'une enveloppe isolante ayant la forme d'un tube cylindrique. Cette enveloppe définit une cavité dans laquelle sont disposées une ou plusieurs colonnes de varistances empilées les unes sur les autres. Chaque parafoudre est raccordé en parallèle à l'équipement électrique à protéger, dans le but de réduire les surtensions pouvant se produire aux bornes de ce dernier. En pratique, chaque parafoudre se présente sous la forme d'un circuit normalement ouvert qui se "transforme" en un circuit fermé parallèle à l'équipement à protéger dès qu'une surtension significative apparaît aux bornes de ce dernier. Il permet donc de réduire le niveau d'isolation de l'équipement électrique qu'il protège.

Il convient toutefois de mentionner qu'il pourrait exister de nombreuses autres applications possibles et utilitaires des varistances, notamment pour la protection de réseaux secondaires, la protection d'équipements électriques domestiques, la protection d'équipements électroniques ou miniaturisés, etc...

Il existe actuellement sur le marché de nombreuses varistances à base d'oxyde de zinc. À titre d'exemples pour de telles varistances utilisables dans des parafoudres, on peut citer celles commercialisées sous les marques *RAYCHEM* et *SEDIVER.* Ces varistances sont fabriquées par frittage d'un mélange de poudres de ZnO, de $Bi_2O_3$ et éventuellement d'autres oxydes tels que $Sb_2O_3$ et/ou $SiO_2$ à des températures de l'ordre de 1200°C. Ces varistances ont une taille moyenne de grain de ZnO supérieure à 3 $\mu$m (de l'ordre de 10 $\mu$m pour les varistances de marque *RAYCHEM* et de l'ordre de 6 $\mu$m pour celles de marque *SEDIVER)*. Leur tension de claquage est proportionnelle aux nombres de joints de grain ou de barrières isolantes de $Bi_2O_3$ par unité de longueur et est typiquement inférieure à 2.5 kV/cm (de l'ordre de 1,6 kV/cm pour les varistances de marque *RAYCHEM* et de l'ordre de 2 kV/cm pour celles de marque *SEDIVER*).

Il existe de très nombreux articles scientifiques traitant de la structure et des propriétés des varistances à base de ZnO. Certains de ces articles suggèrent que l'utilisation d'une poudre de ZnO pur ou dopé de taille nanométrique comme produit de départ aurait de nombreux avantages, dont notamment une substantielle augmentation de la tension de claquage et du coefficient de non-linéarité de la courbe de courant-tension (ci-après appelé "coefficient $\alpha$") de la varistance ainsi obtenue. Cette tension de claquage semble en effet être inversement proportionnelle à la taille des grains de ZnO et, de là, à la température de frittage.

À titre d'exemples de tels articles, on peut citer les suivants:

- *S. HINGORANI et al*, "Microemulsion mediated synthesis of zinc-oxide nanoparticles for varistor studies", Mat. Res. Bull., 28 (1993), 1303;
- *S. HINGORANI et al*, "Effect of process variables on the grain growth and microstructure of ZnO-$Bi_2O_3$ varistors and their nanosize ZnO precursors", J. of Materials Research, 10 (1995), 461;
- *J. LEE et al*, "Impedance spectroscopy of grain boundaries in nanophase ZnO", J. of Materials Research, 10 (1995) 2295;

- *R.N. VISWANATH et al*, "Preparation and characterization of nanocrystalline ZnO based materials for varistor applications", Nanostructured Materials, 6 (1995), 993.

Dans ces articles, les nanoparticules de ZnO sont préparées par microémulsion (cf. les articles de *S. HINGORANI et al*), par condensation en phase gazeuse (cf. l'article de *J. LEE et al*) ou suspension colloïdale et séparation par centrifugation (cf. l'article de *R.N. VISWANATH et al*). Dans tous les cas, la poudre obtenue est pressée pour former une pastille ou un disque qui est alors soumis à un frittage à une température qui peut être aussi basse que 600°C à 750°C pour éviter d'affecter la taille des cristallites (voir l'article de *R.N. VISWANATH* et al et celui de *J. LEE et al*) ou aussi élevée que 1200°C (voir les articles de *S. HINGORANI et al*).

Récemment, un article a été publié par les inventeurs de la présente invention dans les proceedings d'ISMANAM-96. Dans cet article intitulé "Bali milled ZnO for varistor applications", on trouve rapportés des résultats d'essais effectués sur des pastilles préparées à partir d'une poudre nanocristalline de ZnO pur obtenue par broyage mécanique intense puis soumise à un pressage et à un frittage à 1250°C pendant 1 heure. Ces essais montrent que les pastilles ainsi obtenues n'ont aucun effet de varistance, contrairement à celles obtenues à partir d'une poudre de ZnO de taille nanométrique obtenue par condensation en phase gazeuse (voir à nouveau l'article de *J. LEE et al*).

Dans un article de *Z. BRANKOVIC et al, "Nanostructure constituents of ZnO-based varistors prepared by mechanical attrition"*, Nanostructured Materials, 4 (1994), 149, il est décrit une méthode de fabrication d'une varistance comprenant les étapes suivantes:

(a) on prépare en premier lieu chacune des phases constituantes principales d'une variante à base de ZnO;
(b) on mélange des poudres des phases constituantes ensemble;
(c) on broie intensément les poudres après leur mélange de façon à ce que les poudres obtenues soient nanocristallines; et
(d) on soumet le mélange ainsi broyé à un traitement de consolidation comprenant un pressage puis un frittage à une température de 1100°C (1373 K) pendant 1 heure.

Le produit final ainsi obtenu a les caractéristiques d'une varistance conventionnelle. La taille des grains de ZnO se situe entre 5.5 et 7.5μm (voir Table 2) c'est-à-dire dans la gamme typique des varistances conventionnelles. De plus, les tensions de claquage ont une valeur comprise entre 4.1 et 6.6 kV/cm. Les auteurs mentionnent: "*There is no significant difference in electrical properties between the milled samples and sample Z1 (the reference sample) sintered under the same conditions, but the milled samples have higher values in the sintered density... It is evident that varistor mixtures which were intensively milled before sintering are more active for sintering process. It is the consequence of increase of surface free energy and defects concentration,* as *well* as *uniform distribution of powder particles and a decrease of powder particles size*".

Le brevet des États-Unis no 4.681.717 décrit un procédé chimique de fabrication de varistances, impliquant la co-précipitation de métaux suivie d'une oxydation par calcination et d'un frittage à une température de 675 à 740°C pour des périodes excédant 4 heures. Les varistances ainsi obtenues sont décrites comme ayant une taille de grains inférieure à 1μm, une tension de claquage de 10 à 100 kv, un coefficient $\alpha$ de non-linéarité supérieur à 30 et une densité de l'ordre de 65 à 99% de la densité théorique dépendant de la composition et la température de frittage.

## RÉSUMÉ DE L'INVENTION

Il a maintenant été découvert que si:

d'une part, on utilise comme produits de départ des poudres conventionnelles ou nanocristallines obtenues par broyage mécanique intense, et
d'autre part, on fait subir au mélange obtenu à partir de ces poudres un broyage intense suivi d'un traitement de consolidation incluant un frittage, dans des conditions de température et de temps adéquatement choisies de façon à conserver la plus petite taille possible de grains de ZnO,
il est possible d'obtenir des varistances à microstructure très fine, homogène et dont la taille moyenne des grains est typiquement inférieure ou égale à 3μm, ce qui est trois à cinq fois plus petit que la taille de grains des matériaux conventionnels.

Ces nouvelles varistances ont un plus grand nombre de joints de grain par unité de longueur et donc une tension de claquage beaucoup plus élevée. Elle est typiquement supérieure à 10 kV/cm et peut atteindre 17 kV/cm ce qui est presqu'un ordre de grandeur au dessus de la tension de claquage des varistances conventionnelles. Pour une tension d'opération fixée, cette augmentation de performance permet, en principe, de réduire proportionnellement la taille des dispositifs de protection.

Le coefficient $\alpha$ de non-linéarité de la courbe de courant-tension est aussi amélioré. Il est supérieur à 20 et peut atteindre des valeurs aussi élevées que 60 alors qu'il est de l'ordre de 40 pour les varistances de marque SEDIVER et de 36 pour celles de marque RAYCHEM.

En outre, les courants de fuite en dessous de la tension de claquage des varistances ainsi produites sont plus faibles.

La présente invention a donc pour premier objet une méthode de fabrication d'une varistance à très haute tension de claquage, du type dans laquelle:

(a) on mélange des poudres d'oxyde de zinc (ZnO) et d'oxyde de bismuth ($Bi_2O_3$) avec au moins une autre poudre d'un additif capable d'influencer les propriétés des varistances, ce mélange étant effectué avec des quantités de poudre choisies de façon à ce que l'oxyde de zinc représente au moins 75 mole% du mélange;
(b) on broie intensément lesdites poudres d'oxydes et d'additifs avant, pendant ou après leur mélange au moyen d'un broyeur mécanique à haute énergie de façon à ce que ces poudres soient nanocristallines; et
(c) on soumet le mélange ainsi broyé à un traitement de consolidation,

caractérisée en ce que ledit traitement de consolidation (c) inclut un frittage et est effectué dans des conditions de températures et de temps choisies de façon à simultanément conserver une taille de grains d'oxyde de zinc inférieure à 3 $\mu$m et une porosité faible, la température de frittage étant comprise entre 800 et 1200°C et le temps de traitement à ladite température de frittage étant inférieur ou égal à 2,5 heures..

De préférence, l'étape (b) de broyage intense est effectuée après l'étape (a) de mélange des poudres. La poudre d'oxyde de zinc utilisée comme produit de départ peut être broyée préalablement à l'étape de mélange (a), soit seule, soit en combinaison avec des agents dopants tels que $Al_2O_3$. En parallèle, la poudre d'oxyde de bismuth et tous les autres additifs choisis peuvent être mélangés, broyés et traités à une haute température égale ou supérieure à celle de l'étape (c) préalablement à l'étape de mélange (a).

De préférence aussi, les poudres d'oxydes ou leur mélange sont calcinées à une température inférieure ou égale à 550°C préalablement à la mise en oeuvre de l'étape (c), avant ou après l'étape de broyage (b), et le frittage fait durant le traitement de consolidation de l'étape (c) est effectué à une température inférieure à 1200°C pendant une période de temps inférieure ou égale à 2,5 heures. Le taux de chauffage pour atteindre la température de frittage est avantageusement compris entre 0,5 et 10°C/min et est de préférence de l'ordre de 1°C/min.

L'invention a également pour objet la varistance à base d'oxyde de zinc (ZnO) et d'oxyde de bismuth ($Bi_2O_3$) obtenue par mise en oeuvre de la méthode ci-dessus décrite. Cette varistance présente une très haute tension de claquage, typiquement supérieure à 10 kV/cm, et de nombreuses autres propriétés intéressantes, dont un haut coefficient $\alpha$ de non-linéarité de la courbe courant-tension et un faible courant de fuite. Plus précisément, la varistance ainsi fabriquée contient au moins 75% mole de ZnO et a les caractéristiques suivantes:

- elle présente une microstructure très fine, homogène et dont la taille moyenne des grains de ZnO est inférieure à 3 microns;
- elle a une tension de claquage supérieure à 10 kV/cm;
- elle a un coefficient de non-linéarité de la courbe de courant-tension supérieur à 20; et
- elle a un très faible courant de fuite en dessous de la tension de claquage.

Les varistances selon l'invention sont utilisables comme éléments de protection des réseaux primaires et secondaires, des appareillages électriques et des composants électroniques ou miniaturisés. Par exemple, elles peuvent être utilisées dans la fabrication des parafoudres pour la protection des transformateurs. Elles peuvent aussi être utilisées dans les sorties électriques pour protéger les équipements domestiques contre les surtensions. Elles peuvent enfin être utilisées dans les micro-circuits pour la protection des composants électroniques.

De par leurs propriétés et notamment leur haute tension de claquage, les varistances selon l'invention offrent une possibilité de miniaturisation qui ouvre la porte à une foule d'applications qui ne pouvaient être envisagées avec les matériaux conventionnels. Ainsi, par exemple, les varistances conventionnelles ont une tension de claquage relativement basse (de l'ordre de 1,6 kV/cm pour les varistances de marque RAYCHEM) de sorte que pour une tension d'opération de 30 kV, qui est de l'ordre de celle requise pour la protection des transformateurs de distribution, un empilage de varistances de plus de 18.75 cm de long est requis dans les parafoudres. Avec les varistances selon l'invention qui peuvent aisément avoir une tension de claquage de 16 kV/cm ou plus (voir la description détaillée ci-après), une varistance de 2 cm d'épaisseur ou un empilage de varistances de 2 cm de long suffira à obtenir la même protection contre les surtensions supérieures à 30 kV/cm.

L'invention et ses nombreux avantages seront mieux compris à la lecture de la description détaillée mais non limitative qui va suivre.

## DESCRIPTION DÉTAILLÉE DE L'INVENTION

L'invention a donc comme premier objet une méthode de fabrication d'une varistance à très haute tension de claquage à base d'oxyde de zinc (ZnO) et d'oxyde de bismuth ($Bi_2O_3$).

Cette méthode comprend deux premières étapes dites de mélange (a) et de broyage (b), qui peuvent être combinées ou inversées.

L'étape (a) consiste à mélanger des poudres d'oxyde de zinc (ZnO) et d'oxyde de bismuth ($Bi_2O_3$) avec une ou plusieurs autres poudres d'additifs capables d'influencer les caractéristiques de la varistance.

Ces autres additifs sont de préférence choisis dans le groupe constitué par les oxydes, les carbures, les nitrures, les nitrates et les hydrures capables de doper les varistances, modifier leurs caractéristiques de la courbe courant-tension, modifier la résistivité des phases, réduire leurs courants de fuite, augmenter leur capacité de dissipation d'énergie, contrôler leur porosité, ralentir la croissance de grain, augmenter leur intégrité structurale, altérer le point de fusion des différentes phases et améliorer leur stabilité chimique, électrique, mécanique et thermique. Ces oxydes, carbures, nitrures, nitrates et hydrures sont de préférence à base d'éléments suivants: Si, Sb, Mn, Ge, Sn, Pb, Sb, B, Al, Ti, Ta, Fe, S, F, Li, Ni, Cr, Mo, W, Be, Br, Ba, Co, Pr, U, As, Ag, Mg, V, Cu, C, Zr, Se, Te et Ga.

Selon un mode de réalisation tout particulièrement préféré, les additifs utilisés sont choisis dans le groupe constitué par l'oxyde d'antimoine ($Sb_2O_3$), l'oxyde de manganèse($MnO_2$), l'alumine ($Al_2O_3$), la silice ($SiO_2$), l'oxyde d'étain ($SnO_2$), l'oxyde de niobium ($Nb_2O_5$), l'oxyde de cobalt (CoO ou $Co_3O_4$), l'oxyde de fer ($Fe_2O_3$ ou $Fe_3O_4$) et l'oxyde de titane ($TiO_2$ ou TiO) et les quantités de poudres utilisées lors du mélange sont choisies de façon à ce que le mélange obtenu contienne:

de 0,25 à 10 mole% de $Bi_2O_3$
de 1,5 à 4 mole % de $Sb_2O_3$
de 0,5 à 4 mole % de $MnO_2$
de 0,00125 à 0,05 mole % de $Al_2O_3$
de 0 à 4 mole % de $SiO_2$
de 0 à 2 mole % de $SnO_2$
de 0 à 2 mole % de $Nb_2O_5$
de 0 à 2,5 mole % de CoO
de 0 à 2,5 mole % de $Fe_2O_3$ et
de 0 à 3 mole % de $TiO_2$

la balance étant constituée de ZnO.

Dans tous les cas, il est essentiel que le mélange soit effectué avec des quantités de poudre choisies de façon à ce que l'oxyde de zinc représente au moins 75 mole % du mélange.

Parmi ces divers oxydes, l'oxyde de bismuth ($Bi_2O_3$) utilisé comme élément de base avec l'oxyde de zinc (ZnO) est essentiel pour obtenir une bonne isolation entre les grains de ZnO et de là, un bon effet de varistance.

L'oxyde d'antimoine ($Sb_2O_3$) est connu pour inhiber la croissance des grains et entraver le transfert des ions dans la phase liquide riche en bismuth lors du traitement de consolidation.

La silice ($SiO_2$) est connue pour inhiber la croissance des grains et modifier la stabilité des varistances sous contraintes électriques continues.

Les oxydes de manganèse et cobalt sont connus pour améliorer le coefficient $\alpha$ de la varistance et favoriser les états d'interface.

Les oxydes ferriques et de niobium ainsi que le cation $Al^{3+}$ améliorent également le coefficient $\alpha$.

Enfin, l'oxyde de titane est connu pour augmenter la taille des grains, ce qui est quelque chose à éviter selon l'invention. Toutefois, cet oxyde réagit avec ZnO pour former des particules de $Zn_2TiO_4$ qui semblent augmenter le taux de nucléation et de là, amener une distribution de la taille des grains beaucoup plus homogène.

L'étape (b) de la méthode selon l'invention est absolument essentielle. Elle consiste à broyer intensément les poudres d'oxydes et/ou additifs avant, pendant ou après leur mélange dans un broyeur mécanique à haute énergie de façon à ce que ces poudres deviennent nanocristallines.

De préférence, ce broyage est effectué après le mélange des poudres, c'est-à-dire après l'étape (a). On peut toutefois effectuer le mélange en question en même temps que l'on broie, en ajoutant chacune des poudres l'une après l'autre dans le broyeur. On peut aussi broyer séparément chacune des poudres et ensuite seulement les mélanger. Ainsi, par exemple, la poudre d'oxyde de zinc utilisée comme produit de départ peut être broyée préalablement à l'étape de mélange (a), soit seule, soit en combinaison avec des agents dopants tels que $Al_2O_3$. En parallèle, la poudre d'oxyde de bismuth et tous les autres additifs choisis peuvent être mélangés, broyés et traités à une haute température égale ou supérieure à celle de l'étape (c) préalablement à l'étape de mélange (a).

Le broyage peut être effectué, par exemple, dans un broyeur à billes du type SPEX ou Zoz, utilisant un creuset de carbure de tungstène ou d'acier au chrome. Quelque soit l'équipement utilisé, il est essentiel que les poudres contenues dans le mélange obtenu soient nanocristallines.

Selon un mode de réalisation particulièrement préféré de l'invention, les poudres nanocristallines ainsi préparées sont soumises à une calcination à une température inférieure ou égale à 550°C. Cette calcination peut être effectuée sur chacune des poudres préparées lorsque celles-ci sont broyées séparément. Toutefois, la calcination est préférablement effectuée directement sur le mélange des poudres en question.

Après calcination, le mélange obtenu peut alors être façonné de manière à . former des pastilles. Ceci peut être effectué en introduisant un liant tel que de l'alcool polyvinylique (PVA) puis en soumettant le mélange dans lequel le liant a ainsi été introduit à un pressage pour former des pastilles. On comprendra toutefois que le mélange peut avoir une autre forme, comme par exemple dans le cas d'un tréfilage ou d'un laminage. Les poudres et le PVA peuvent être mélangés dans un creuset identique à celui du broyeur, pendant une période d'environ 1 heure. Le mélange avec le liant ainsi préparé peut alors être pressé par exemple sous une pression de 500 MPa ou plus.

L'étape suivante de la méthode selon l'invention est une autre étape essentielle, Cette étape identifiée par la lettre (c) dans le résumé de l'invention et les revendications annexées, consiste à soumettre le mélange broyé et éventuellement formé, à un traitement de consolidation incluant un frittage effectué dans des conditions de température et de temps choisies de façon à conserver simultanément la taille des grains d'oxyde de zinc la plus petite possible en plus d'une faible porosité.

Le traitement de consolidation peut inclure un traitement de pressage sous différentes atmosphères ($O_2$, Ar, air, $N_2$, $SF_6$,...), laminage, extrusion, tréfilage, projection (plasma spray), injection ou autre. Le traitement implique un chauffage qui peut être à convexion, à induction, à micro-onde, au laser, par décharge électrique ou autre et peut être effectué d'une façon continue ou en une ou plusieurs périodes de courte durée (rapid thermal annealing, pulse treatment, etc.) pendant ou après la consolidation.

Selon un mode de réalisation tout particulièrement préféré de l'invention, le frittage de l'étape (c) est effectué dans un four électrique à une température inférieure à 1200°C pendant une période de temps inférieure ou égale à 2,5 heures. D'un point de vue pratique, ce frittage doit être effectué à une température supérieure à 800°C pour s'assurer que l'oxyde de bismuth ait fondu et mouille bien les grains d'oxyde de zinc de façon à obtenir l'isolation requise. Il ne doit toutefois pas être effectué à une température trop élevée de façon à ne pas faire croître exagérément la taille des grains ou évaporer les additifs.

Selon un mode de réalisation préférentiel, le frittage est effectué à 1000°C pendant une période de temps inférieure ou égale à 1,5 heures.

Le taux de chauffage pour atteindre la température de frittage choisie est de préférence compris entre 0,5 et 10°C/min, la valeur préférée étant 1°C/min. Il a en effet été découvert que plus le taux de chauffage est élevé, plus la porosité de la varistance obtenue le sera, ce qui est quelque chose à éviter.

Enfin, après le traitement de consolidation, les pastilles obtenues peuvent alors être laissées à refroidir à l'air. Tel que précédemment indiqué, les varistances ainsi obtenues ont d'excellentes propriétés.

Ainsi:

- elles présentent une microstructure très fine, homogène et dont la taille moyenne des grains de ZnO est inférieure à 3 microns et de préférence inférieure ou égale à 2 microns;
- elles ont une tension de claquage supérieure à 10kV/cm;
- elles ont un coefficient $\alpha$ de non-linéarité de la courbe de courant-tension supérieur à 20 et de préférence supérieur à 40 ou mieux encore 60; et
- elles ont un très faible courant de fuite en dessous de la tension de claquage.

Les exemples ci-dessous contiennent des résultats d'essais effectués pour la Demanderesse. Avec les dessins annexés, ces exemples permettront de mieux apprécier les qualités et avantages des varistances selon l'invention.

Dans un but de simplicité, les varistances préparées selon l'invention sont identifiées dans les exemples ainsi que dans les dessins annexés par le code:

Sa-b (c)

dans lequel:

S    signifie que la varistance contient de la silice;
a    est le pourcentage en mole de la silice présente;
b    est la température de frittage; et
c    est le temps de frittage, exprimé en heures.

Ainsi, le sigle S2-1000 (1,5h) désignera une varistance incluant 2 mole % de silice préparée par frittage à 1000°C pendant 1,5 heures.

**BRÈVE DESCRIPTION DES DESSINS**

La figure 1 est une représentation graphique d'une méthode préférenciée de fabrication d'une varistance selon l'invention, donnant les températures auxquelles la calcination et le frittage sont effectués en fonction du temps;
la figure 2a est une courbe donnant la valeur de la densité de courant mesurée (exprimée en A/cm$^2$) en fonction de la valeur du champ électrique (exprimé en V/cm) dans le cas d'une varistance S2-1000(2,5h), selon l'invention;
la figure 2b identifiée comme illustrative de l'art antérieur, est une courbe similaire à celle de la figure 2a, donnant la valeur de la densité de courant en fonction de la valeur du champ dans le cas d'une varistance de marque *SEDIVER*;
la figure 3a est une courbe analogue à celle de la figure 2a, mais représentée avec des échelles logarithmiques, cette courbe illustrant le courant de fuite sous le seuil de décharge dans le cas de la varistance S2-1000 (2,5 h) selon l'invention;
la figure 3b identifiée comme illustrative de l'"art antérieur", est une courbe à celle de la figure 3a, illustrant le courant de fuite sous le seuil de décharge de la varistance de marque *SEDIVER*;
la figure 4 est une courbe similaire à celle de la figure 2a, donnant la valeur de la densité de courant en fonction de la valeur du champ dans le cas d'une varistance S2-1000 (0,5 h) selon l'invention;
la figure 5 est une courbe similaire à celle de la figure 3a, cette courbe illustrant le courant de fuite sous le seuil de décharge dans le cas de la varistance S2-1000 (0,5 h) selon l'invention;
la figure 6 est un histogramme représentant la distribution du diamètre moyen (exprimé en μm) des particules de ZnO dans une varistance S2-1000 (1h) selon l'invention;
la figure 7 est une micrographie (grossissement 2000 X) de la microstructure de la varistance S2-1000 (1h) dont le diamètre moyen des particules est illustré sur la figure 6;
la figure 8 est un histogramme similaire à celui de la figure 6, représentant la distribution du diamètre moyen des particules de ZnO dans une varistance S2-1000 (2h) selon l'invention;
la figure 9 est une micrographie similaire à celle de la figure 7, montrant la microstructure de la varistance S2-1000 (2h) dont le diamètre moyen des particules est illustré sur la figure 8;
les figures 10 et 11 sont des représentations similaires à celles des figures 7 et 9, montrant les microstructures de varistances S2-1000 (2,5h) et S2-1200 (2,5h) selon l'invention;
la figure 12 est une courbe donnant la valeur de la tension de claquage (exprimée en kV/cm) en fonction de la durée de broyage (exprimée en heures) dans le cas d'une varistance S2-1000 (2,5h) selon l'invention;
la figure 13 est une courbe donnant la valeur de la tension de claquage (exprimée en kV/cm) en fonction de la durée de frittage (exprimée en heures) dans le cas d'une varistance S2-1000 selon l'invention;
la figure 14 est une courbe donnant la valeur de la tension de claquage en fonction de la température de frittage dans le cas de varistances S2-1000 et S3-1000 selon l'invention;
la figure 15 est une courbe donnant la valeur de la densité de courant (exprimée en A/cm$^2$) en fonction du champ (exprimé en V/cm) et du pourcentage molaire de SiO$_2$ ajouté au mélange de poudres utilisé dans la fabrication de varistances de type S-1000 (1h);
la figure 16 est une courbe donnant la valeur de la porosité (exprimée en % volume) en fonction du taux de chauffage (exprimé en degré C' par minute) lors de l'étape de frittage dans le cas d'une varistance S2-1000 (1h) selon l'invention;
la figure 17 est une courbe similaire à celle de la figure 15, qui donne la valeur de la densité de courant en fonction du champ et du pourcentage molaire de Sb$_2$O$_3$ ajouté au mélange de poudres utilisé dans la fabrication d'une varistance de type S2-1000 (1h);
la figure 18 est une courbe similaire à celle de la figure 15, qui donne la valeur de la densité de courant en fonction du champ et du pourcentage molaire de MnO$_2$ ajouté au mélange de poudres utilisé dans la fabrication d'une varistance de type S2-1000 (1h);
la figure 19 est une courbe similaire à celle de la figure 15, qui donne la valeur de la densité de courant en fonction du champ et du pourcentage molaire de SnO$_2$ ajouté au mélange de poudres utilisé dans la fabrication d'une varistance de type S2-1000 (1h); et
la figure 20 est une courbe similaire à celle de la figure 15, qui donne la valeur de la densité de courant en fonction du champ et du pourcentage molaire de Nb$_2$O$_5$ ajouté au mélange de poudres utilisé dans la fabrication d'une varistance de type S2-1000 (1h).

EP 1 010 186 B1

**EXEMPLE 1**

Préparation de varistances S2-1000 (2,5h)

De la poudre pure à 99.99% de ZnO (obtenue de la Société Aldrich) a été mélangée à 3% mole de $Bi_2O_3$, 2% mole de $Sb_2O_3$, 2,5% mole de $MnO_2$, 2% mole de $SiO_2$ et 0,005 % mole de $Al_2O_3$, le tout totalisant 10g. Le mélange a été scellé sous air dans un creuset d'acier (volume de 60 cc) contenant trois billes d'acier de 11 mm de diamètre et a été broyé pendant 10 heures à l'aide d'un broyeur vibrant à 700 rpm.

La taille de cristallites après broyage était de l'ordre de quelques dizaines de nanomètres.

Le mélange de poudres ainsi obtenu a par la suite été calciné sous air à 500-550°C pendant 2,5 h puis mélangé à 2% en poids de PVA utilisé comme liant. Le mélange de poudres et le PVA ont été mélangés en broyant le tout pendant 1 heure dans un creuset identique à celui utilisé pour la préparation du mélange.

La poudre avec le liant ainsi mélangés ont été pressés sous forme de pastilles de 9 mm de diamètre et de 1,5 mm d'épaisseur sous une pression de 500 MPa.

Les pastilles ont ensuite été chauffées à une vitesse de 5°C/min (taux de chauffage) dans un four électrique, jusqu'à ce qu'elles atteignent une température de frittage de 1000°C où elles ont été conservées sous air pendant 2,5h. Une fois le frittage complété, elles ont été refroidies dans le four en fermant l'alimentation électrique (taux de refroidissement environ 5°C/min jusqu'à 500°C).

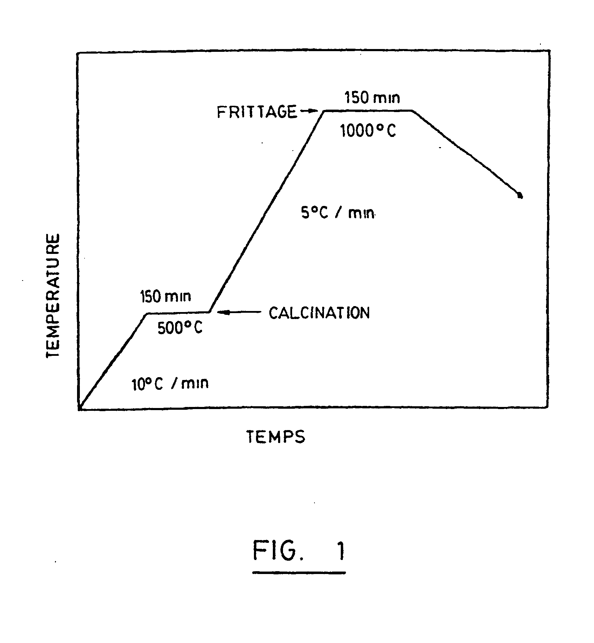

La Figure 1 donne le profil de température du traitement effectué sur le mélange de poudre en fonction du temps.

Les pastilles frittées obtenues ont alors été polies avec du papier sablé pour obtenir une épaisseur finale de 1mm. Des contacts électriques ont ensuite été faits par évaporation d'Au en vue des essais électriques.

Les caractéristiques des matériaux formant les varistances ont été déterminées de la façon suivante.

La taille des cristallites de ZnO a été évaluée à partir du pic (100), des courbes de diffraction X prises avec un diffractomètre Siemens D-5000 en utilisant la radiation Cu-K$\alpha$, positionné à 31,8° en utilisant la formule de Scherrer.

La microstructure des pastilles a été examinée avec un microscope électronique à balayage (modèle JEOL JSN 840A et HITACHI S-570) équipé d'un analyseur d'image. La taille des grains a été évaluée à partir des micrographies obtenues.

La composition chimique globale du matériau ainsi obtenu est la suivante:

| | |
|---|---|
| ZnO | 90,495 mole % |
| $Bi_2O_3$ | 3 mole % |
| $Sb_2O_3$ | 2 mole % |
| $SiO_2$ | 2 mole % |
| $MnO_2$ | 2,5 mole % |
| $Al_2O_3$ | 0,005 mole % |

Le tableau ci-dessous donne la taille moyenne des grains de ZnO du matériau ainsi obtenu ainsi que le pourcentage en poids de ses principaux éléments (mesuré par EDX). Il donne aussi à titre de comparaison, la taille des grains de ZnO et les pourcentages en poids des éléments des matériaux commercialisés sous les marques RAYCHEM et SEDIVER.

TABLEAU

| | Invention | RAYCHEM | SEDIVER |
|---|---|---|---|
| Taille moyenne des grains de ZnO | 2μm | 10 μm | 6μm |
| ZnO | 76 % poids | 92 % poids | 90 % poids |
| $Bi_2O_3$ | 14,4 | 4 | 3 |
| $Sb_2O_3$ | 6 | 1,5 | 4 |
| $SiO_2$ | 1,2 | - | 1 |
| $MnO_2$ | 2,2 | - | - |

## EXEMPLE 2

Préparation d'une varistance S2-1000 (1h)

En utilisant les mêmes produits de départ et les mêmes pourcentages molaires que dans l'exemple 1, on a procédé à un premier mélange du $Bi_2O_3$ avec tous les autres additifs choisis, à savoir $Sb_2O_3$, $MnO_2$, $SiO_2$ et $Al_2O_3$. Ce premier mélange a été broyé à haute énergie pendant 10 heures dans un appareil de marque SPEX. On a alors procédé à pressage de ce premier mélange broyé sous une pression de 160 MPa de façon à obtenir une première pastille. Cette première pastille a alors été frittée à 1100°C pendant 1 heure, puis brisée en morceaux.

Les morceaux de la première pastille ont ensuite été mélangés à la poudre pure à 99.99% de ZnO. Le second mélange ainsi obtenu a été broyé à haute énergie pendant 10 heures dans le même appareil SPEX. Le second mélange broyé obtenu a alors été calciné à 550°C pendant 2,5 heures et mélangé à 2% en poids de PVA utilisé comme liant. Le mélange de poudre et PVA obtenu a alors été pressé sous la forme d'une seconde pastille sous une pression de 630 MPa. Cette seconde pastille a fait l'objet d'un frittage à 1000°C pendant 1 heure, puis a été refroidie dans le four de frittage.

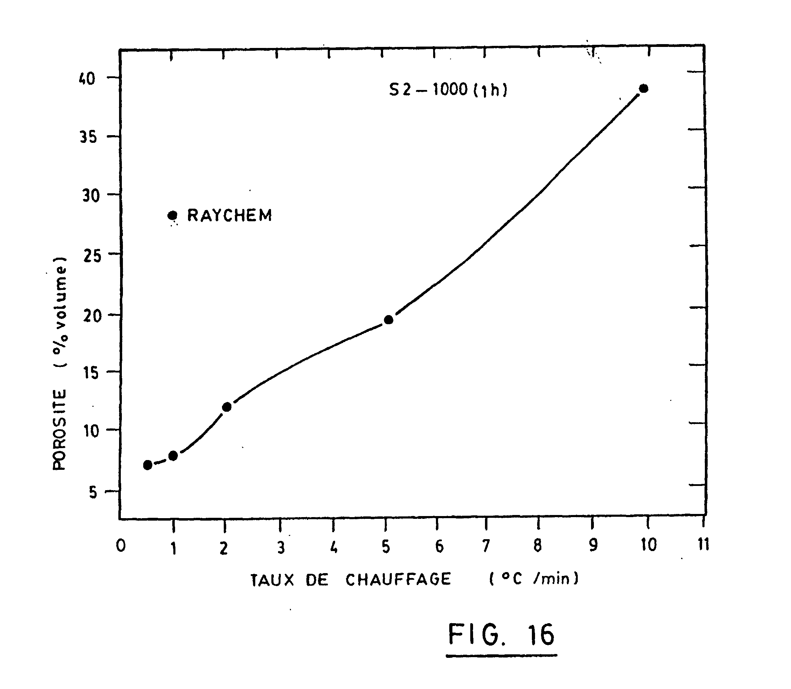

La seconde pastille frittée ainsi obtenue a été traitée puis testée de la même façon que dans l'exemple 1 et s'est avérée avoir sensiblement les mêmes propriétés électriques mais une porosité nettement plus faible (par un facteur 2) - voir figure 16-.

## EXEMPLE 3

Préparation d'une varistance S2-1000 (1h)

En utilisant les mêmes produits de départ et les mêmes pourcentages molaires que dans l'exemple 1, on a procédé sensiblement de la même façon que dans l'exemple 2, si ce n'est que, dans le premier mélange préparé, on a exclu les agents de dopage du ZnO, tel que $Al_2O_3$, pour se limiter exclusivement aux matériaux dits de "joints de grains", à savoir $Bi_2O_3$, $Sb_2O_3$, $MnO_2$ et $SiO_2$. On a fait subir à ce premier mélange les mêmes premiers broyage, pressage et frittage que dans l'exemple 2, dans les mêmes conditions.

En parallèle à ce traitement, on a broyé la poudre pure de ZnO avec son agent dopant $Al_2O_3$ pendant 10 heures dans un appareil SPEX, et on a mélangé la poudre broyée ainsi obtenue avec les morceaux de la première pastille frittée obtenue. On a alors fait subir à ce nouveau mélange les mêmes seconds broyage, calcination, ajout de PVA, pressage et frittage que dans l'exemple 2.

La seconde pastille frittée obtenue comme produit final s'est avérée là encore avoir sensiblement les mêmes propriétés électriques que celles obtenues aux exemples 1 et 2, mais une porosité nettement plus faible que dans l'exemple 1.

## EXEMPLE 4

Évaluation des caractéristiques I-V des varistances S2 -1000 (2,5h)

Les caractéristiques de courant-tension (I-V) ont été mesurées sur les pastilles en utilisant un résistomètre Hewlett-Packard HP-4339A en utilisant la technique standard à 4 points. La tension appliquée a été variée de 0,1 à 1000 V et le courant a été mesuré dans une plage de $10^{-8}$ à $10^{-1}$mA.

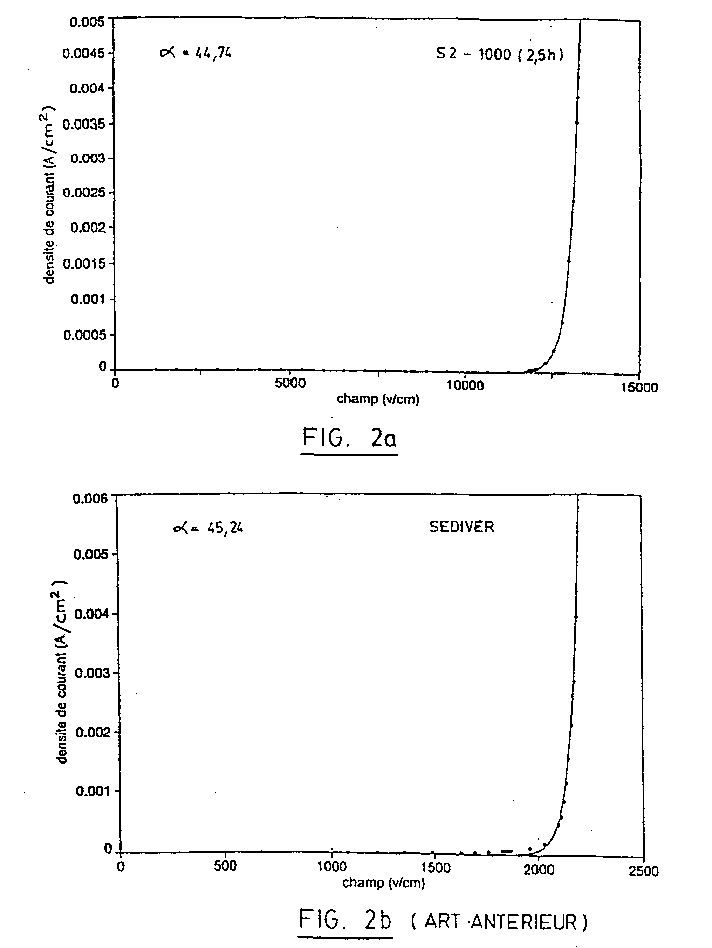

La figure 2a est une courbe donnant la valeur de la densité de courant mesurée en fonction du champ (V/cm) dans le cas de la varistance S2-1000(2,5h) préparée selon l'exemple 1. La figure 2b est une courbe similaire à la figure 2a, donnant la valeur de la densité de courant en fonction du champ dans le cas d'une varistance de marque SEDIVER.

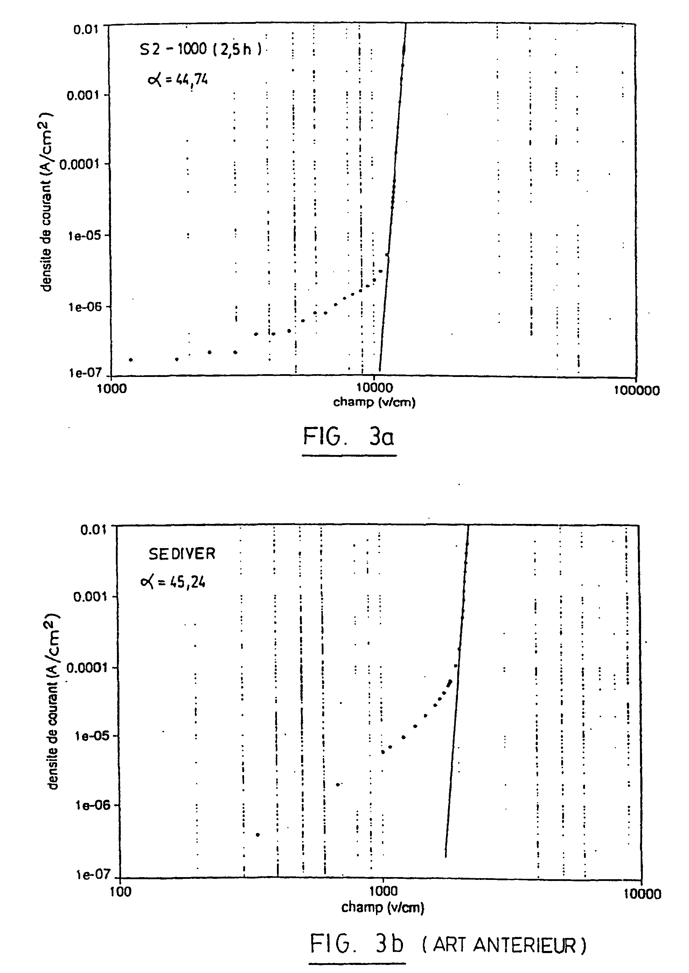

Comme on peut le constater, la tension de claquage de la varistance S2-1000 (2,5h) selon l'invention est au voisinage de 12,5 kV/cm et le coefficient $\alpha$ de non-linéarité est de 44,7. Les courants de fuite sous le seuil de la décharge sont dans la plage de $1 \times 10^{-7}$ à $2 \times 10^{-6}$ A/cm$^2$. Les courants de fuite sont illustrés plus en détail sur la figure 3a.

La tension de claquage du matériau conventionnel de marque SEDIVER est au voisinage de 2 kV/cm et son coefficient $\alpha$ de non-linéarité est de 45,2. Les courants de fuite sous le seuil de la décharge sont dans la plage de $1 \times 10^{-6}$ à $1 \times 10^{-4}$ A/cm$^2$. Ces courants de fuite sont illustrés sur la figure 3b, donnée à titre de comparaison.

## EXEMPLE 5

Évaluation de l'importance du temps de frittage

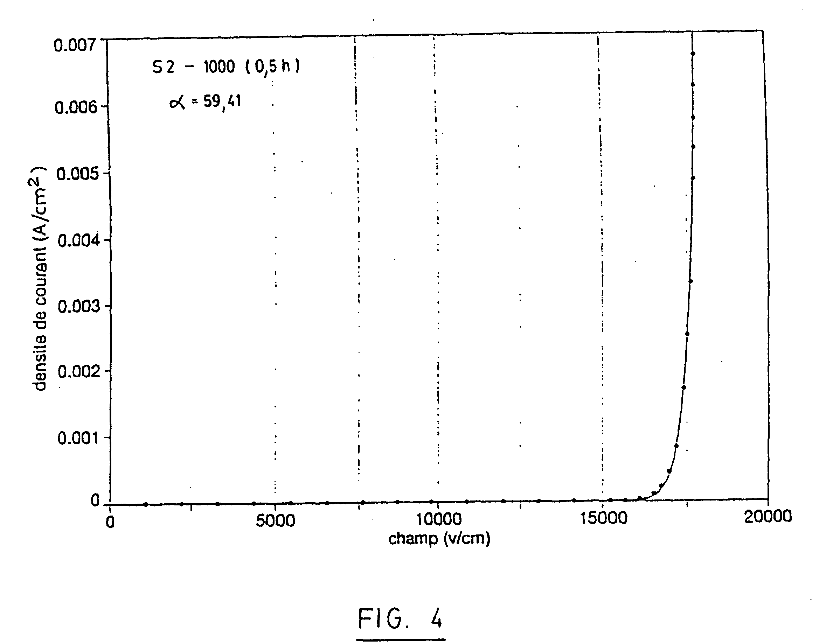

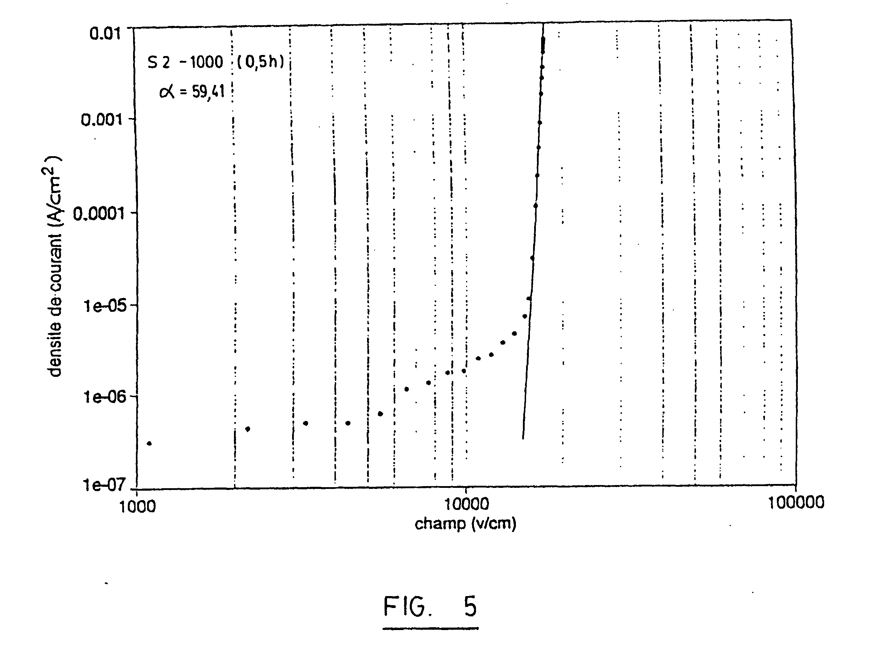

Les figures 4 et 5 sont des courbes similaires aux courbes des figures 2a et 3a. Ces courbes donnent la valeur de la densité de courant en fonction du champ ainsi que la valeur des courants de fuite d'une varistance S2-1000 (0,5h) ayant exactement la même composition et préparée exactement de la même façon que la varistance S2-1000 (2,5h) de l'exemple 1 si ce n'est que le temps de frittage est de 0,5h au lieu de 2,5h.

Comme on peut le constater, la tension de claquage est au voisinage de 16 kV/cm, ce qui prouve bien que moins le frittage est long, moins la taille des cristallites est affectée et plus la tension de claquage est élevée. Toutefois, un frittage trop court (ou effectué à une température pas assez élevée ou à un taux de chauffage trop élevé) ne résout pas les problèmes de porosité qui peuvent affecter la qualité des varistances.

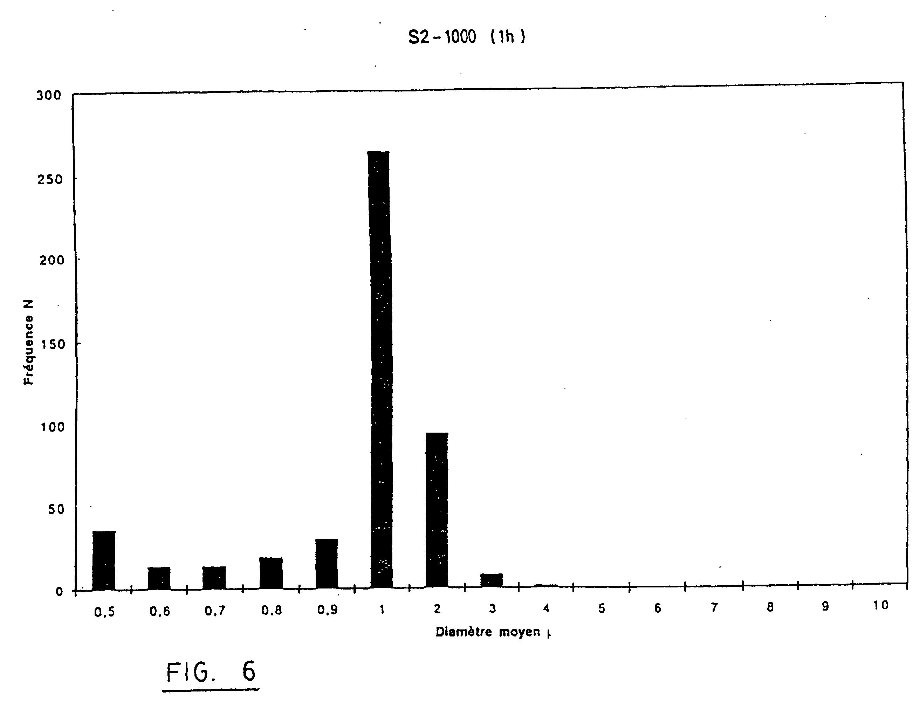

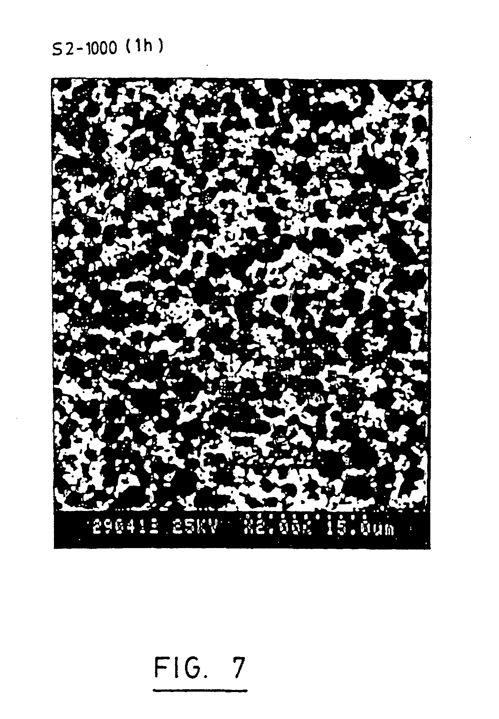

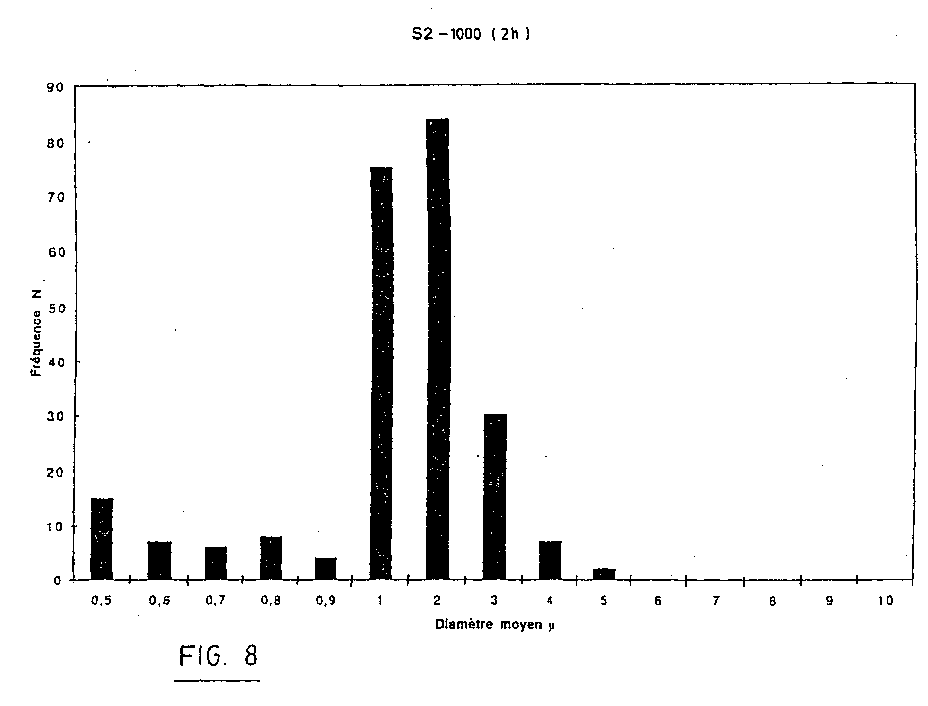

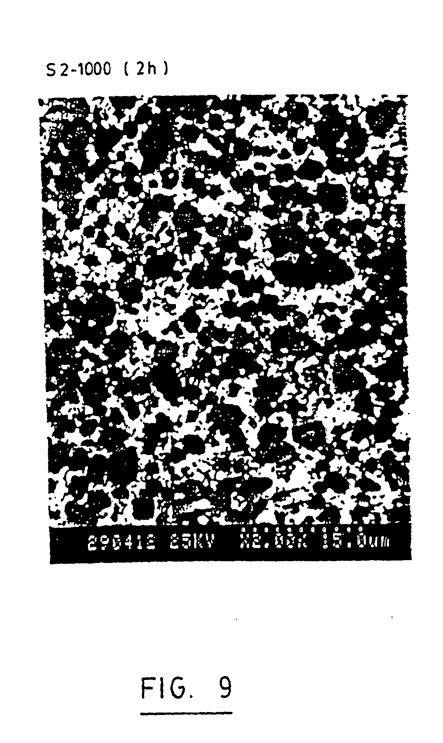

L'effet de la durée de frittage sur la taille des grains de ZnO est mieux illustré sur les figures 6 à 9 qui donnent la distribution de la taille des grains de ZnO et des micrographies de ceux-ci dans le cas d'une varistance S2-1000 (1h) - voir figures 6 et 7 - et d'une varistance S2-1000 (2h) - voir figures 8 et 9.

Dans ces deux cas, les varistances avaient exactement la même composition que celle de l'exemple 1 et ont été préparées exactement de la même façon, si ce n'est que les durées du frittage à $1000°C$ étaient respectivement de 1h et 2h (au lieu de 2,5h).

Comme on peut le constater, le diamètre moyen des grains est de l'ordre de 1μm pour la varistance S2-1000 (1h). Ce diamètre moyen double presque dans le cas des varistances S2-1000 (2h). Ceci vient à nouveau confirmer que la durée du frittage influence directement la taille des grains et de là, doit être aussi courte que possible pour obtenir les meilleurs résultats.

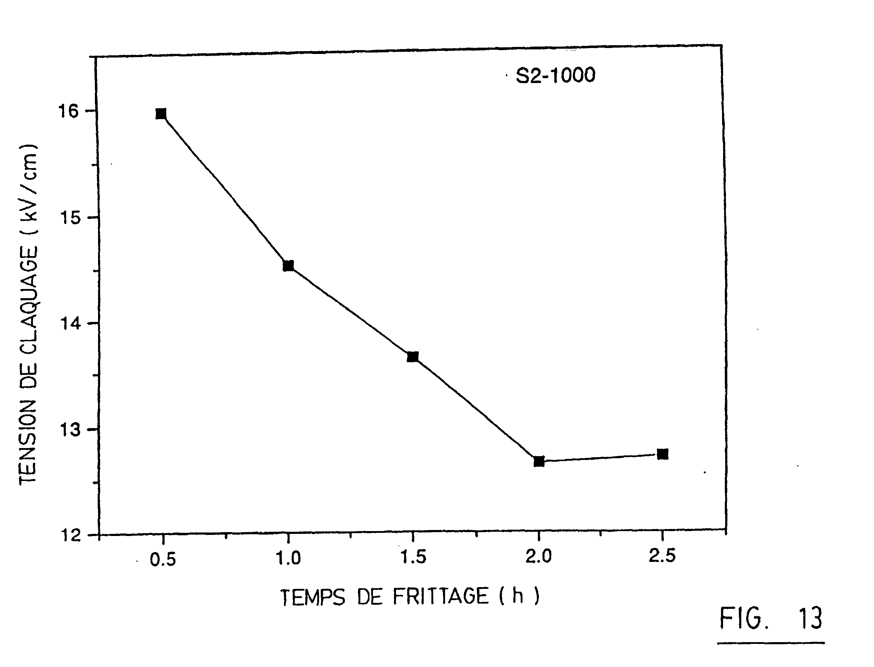

La figure 13 est une courbe donnant la valeur de la tension de claquage en fonction de la durée du frittage dans le cas d'une varistance S2-1000 ayant la même composition que celle de l'exemple 1 et ayant été préparée exactement de la même façon, sauf pour le temps du frittage effectué à $1000°C$.

On observe que, pour de courtes durées de l'ordre de 0,5h, la tension de claquage atteint des valeurs de l'ordre de 16kV/cm. On observe également qu'au dessus de 2h, la tension de claquage semble se stabiliser.

## EXEMPLES 6

Évaluation de l'importance de la température de frittage

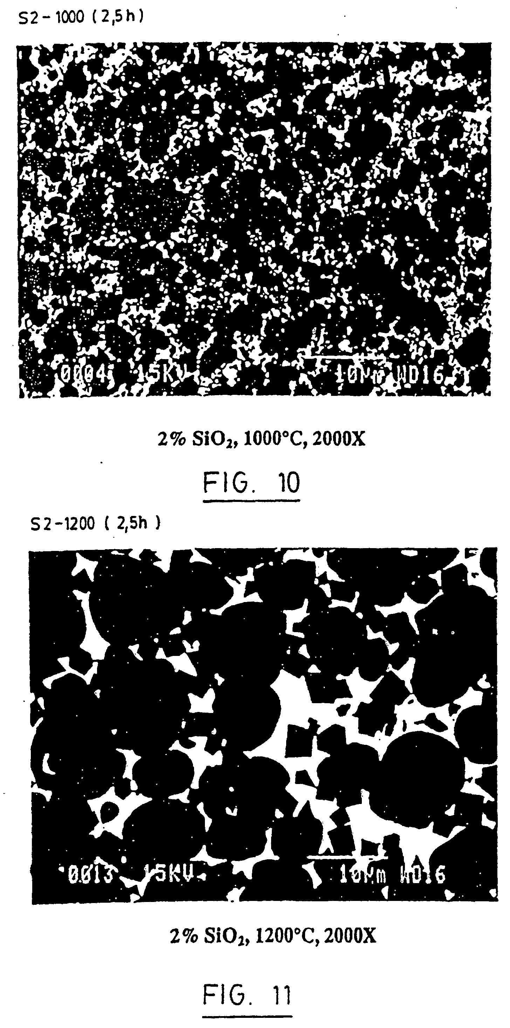

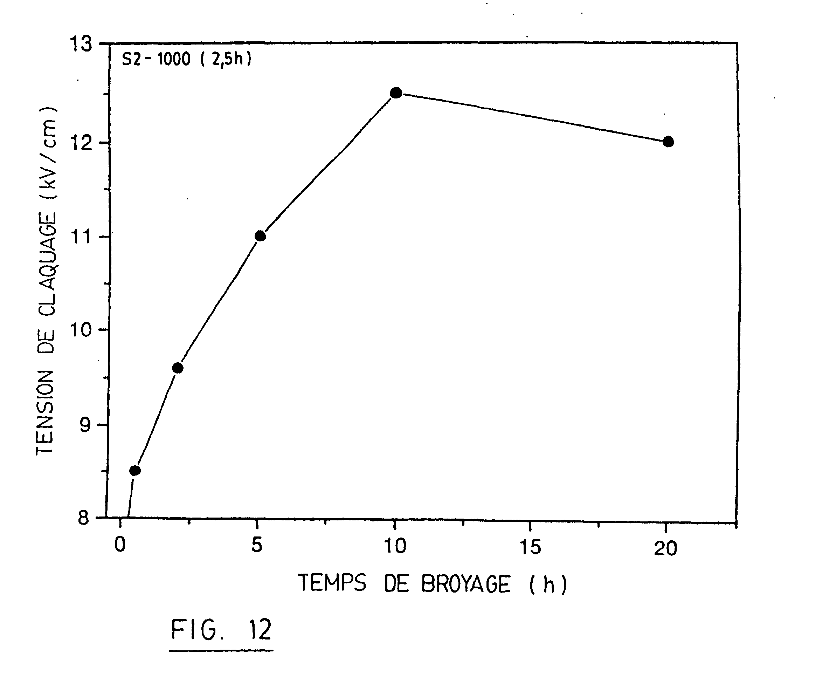

La figure 10 est une micrographie de la structure de la varistance S2-1000 (2,5h) préparée à l'exemple 1. La figure 11 est une micrographie de la structure d'une varistance S2-1200 (2,5h). Sur ces micrographies, les particules rondes et noires sont du ZnO. Comme on peut le voir, elles ont typiquement une taille de 2 microns à $1000°C$ et sont supérieures à 5 microns à $1200°C$.

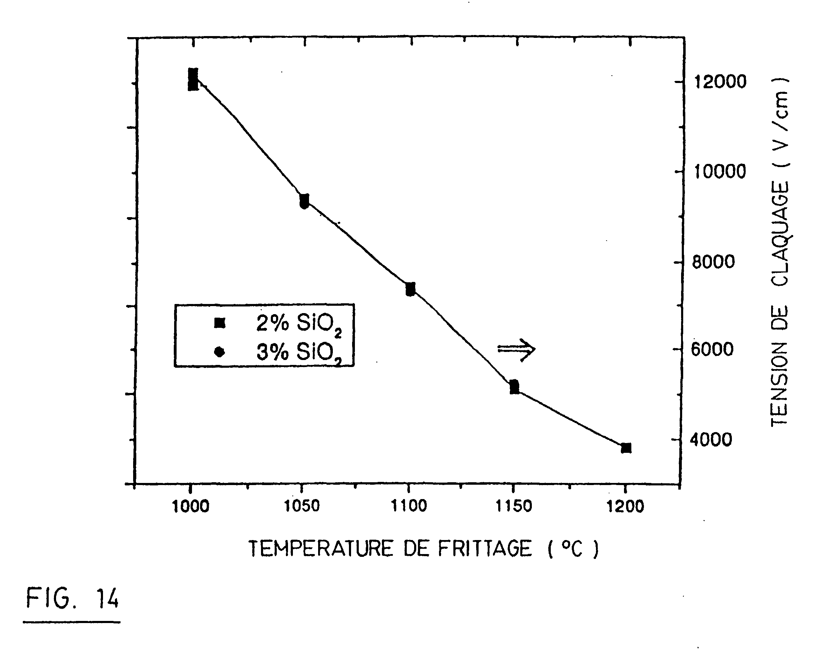

La figure 14 donne la valeur de la tension de claquage dans le cas de varistances S2 et S3 en fonction de la température de frittage. Mis à part la concentration de $SiO_2$, la composition de ces varistances était identique à celle décrite dans l'exemple 1 (le supplément de $SiO_2$ était au détriment du ZnO), et leur préparation effectuée de la même façon si ce n'est la température de frittage.

Comme on peut le constater, quelle que soit la quantité de $SiO_2$ (ajouté pour freiner la croissance de grains durant le frittage), la tension de claquage a diminué de 12.2 kV/cm à 3.7 kV/cm entre $1000°C$ et $1200°C$.

## EXEMPLE 7

Évaluation de l'importance du taux de chauffage

La figure 16 est une courbe donnant la valeur de la porosité en fonction du taux de chauffage dans le cas d'une varistance S2-1000 (1h) ayant exactement la même composition que dans l'exemple 1 et ayant été préparée selon l'exemple 2 avec une calcination de 2,5h à $550°C$, un pressage à 450 MPa et un frittage de 1h à $1000°C$. La différence entre chaque essai résidait dans le taux de chauffage, c'est-à-dire la vitesse à laquelle le mélange pressé poudre-liant était chauffé pour atteindre la température de frittage choisie de $1000°C$.

Comme on peut le constater, le taux de chauffage a une forte influence sur la porosité, qui, pour obtenir une bonne varistance, doit être la plus faible possible. Ainsi, on peut constater que plus le taux de chauffage est lent, plus la porosité est faible. Par contre, si le taux de chauffage et trop lent, on risque de passer trop de temps à haute température, avec le problème que cela occasionne (voir exemple 5).

D'un point de vue pratique, on choisira le taux de chauffage dans une plage de 0,5 à $10°C/min$, le taux préférentiel étant $1°C/min$.

**EXEMPLE 8**

Évaluation de l'importance du temps de broyage

La figure 12 est une courbe donnant la valeur de la tension de claquage en fonction du temps de broyage dans le cas d'une varistance S2-1000 (2,5h) ayant exactement la même composition que celle de l'exemple 1, et ayant été préparée de la même façon avec le même équipement, si ce n'est la durée du broyage initial.
Comme on peut le constater, la tension de claquage atteint un maximum d'environ 12.5 kV/cm après 10h de broyage. Cette figure démontre l'importance du broyage mécanique intense et donc, de la structure nanocristalline obtenue par le broyage sur les propriétés des varistances.

**EXEMPLE 9**

Évaluation de l'importance de l'ajout de $SiO_2$

Tel que précédemment indiqué, la silice $SiO_2$ est un additif particulièrement utile dans la mesure où elle est connue pour freiner la croissance des grains. Or, il est connu également et démontré par les essais ci-dessus rapportés, que la tension de claquage est inversement proportionnelle à la taille des grains de ZnO.

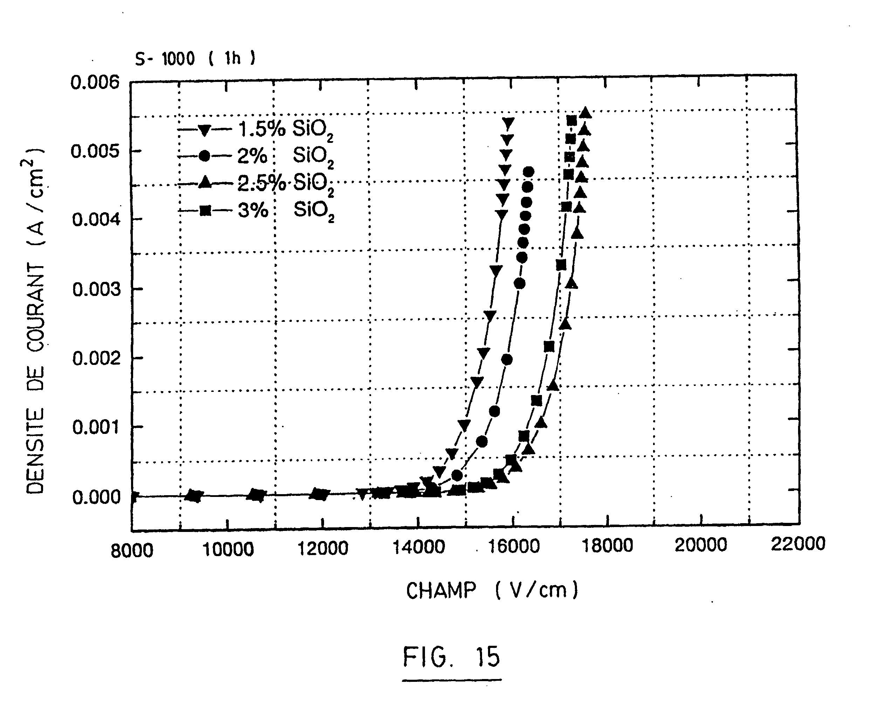

La figure 15 illustre la valeur de la densité de courant en fonction du champ, et de là, la tension de claquage dans le cas de varistance identique à celle de l'exemple 1, à savoir de type S-1000 (2,5h), mais dans laquelle la quantité de silice (exprimée en % mole) variait au détriment de celle de ZnO et pour une durée de frittage de 1h.
Comme on peut le constater, l'ajout de $SiO_2$ modifie le comportement électrique. Cette modification est maximale avec un ajout de 2,5%.

**EXEMPLE 10**

Évaluation de l'importance de l'ajout d'autres additifs

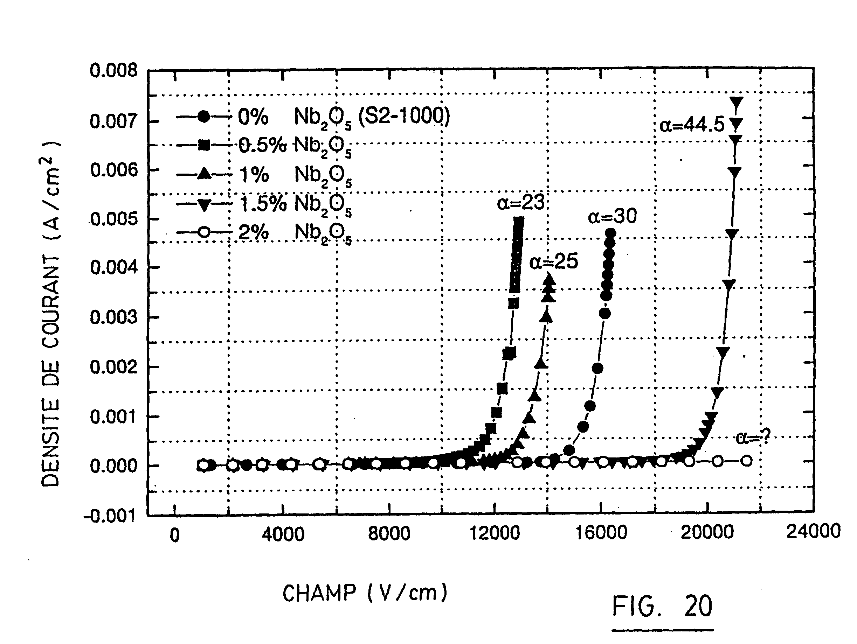

Afin de démontrer l'importance des additifs, quelques mélanges ont été réalisés et évalués. Ces essais ont été effectués sur des varistances de type S2-1000 (1h), mais dans lesquelles la quantité d'un des autres additifs (exprimé en % mole) a été variée au détriment de celle de ZnO. $Al_2O_3$ n'a pas été ajouté dans les mélanges utilisés.

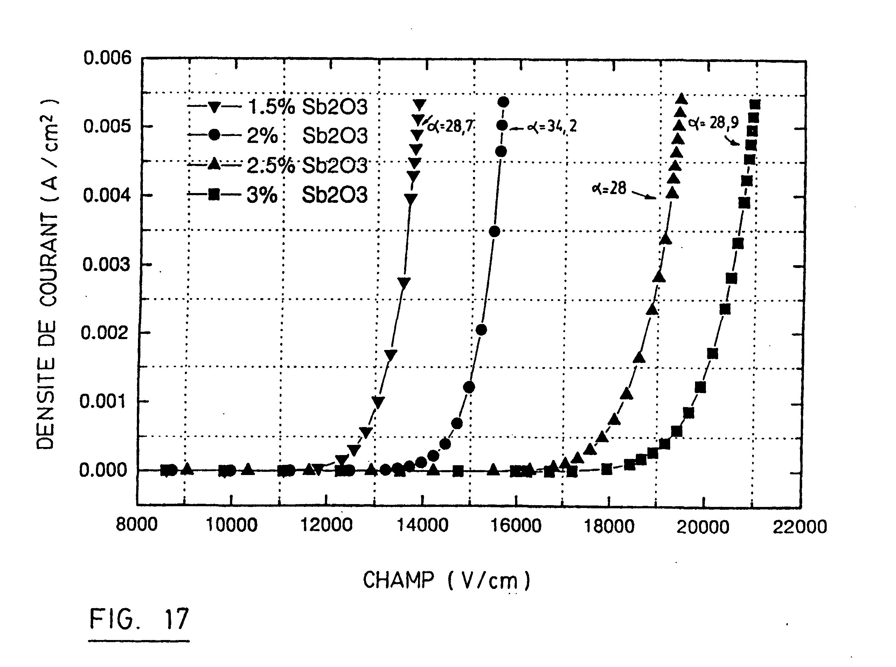

La figure 17 montre l'influence de $Sb_2O_3$. Ces essais ont été effectués sur des varistances de type S2-1000 (1h). Cet additif est connu pour freiner la croissance des grains et entraver le transfert des ions dans la phase riche en bismuth lors du traitement de consolidation (frittage). Comme on peut le constater, une augmentation du pourcentage de $Sb_2O_3$ se traduit par une augmentation substantielle de la tension de claquage, qui atteint presque 20 kV/cm. Par contre, le coefficient $\alpha$ semble atteindre son maximum à 2 mole % de $Sb_2O_3$.

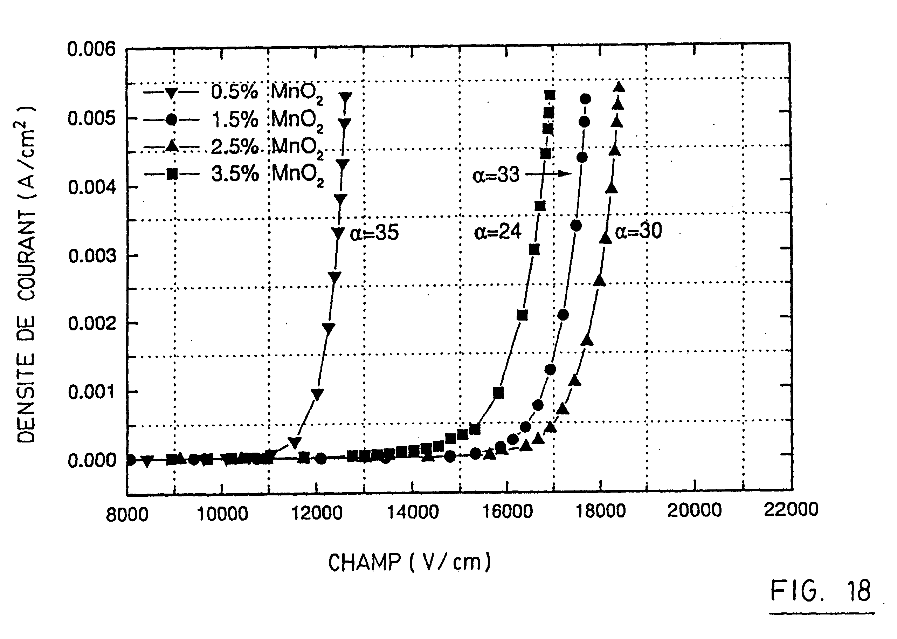

La figure 18 montre l'influence de $MnO_2$. Ces essais ont été effectués sur des varistances de type S2-1400 (1h). Comme on peut le constater, l'ajout de $MnO_2$ jusqu'à 2,5 mole %, au détriment du ZnO, augmente substantiellement la valeur de la tension de claquage. Toutefois, au-dessous de 2,5 mole %, il semble y avoir une régression.

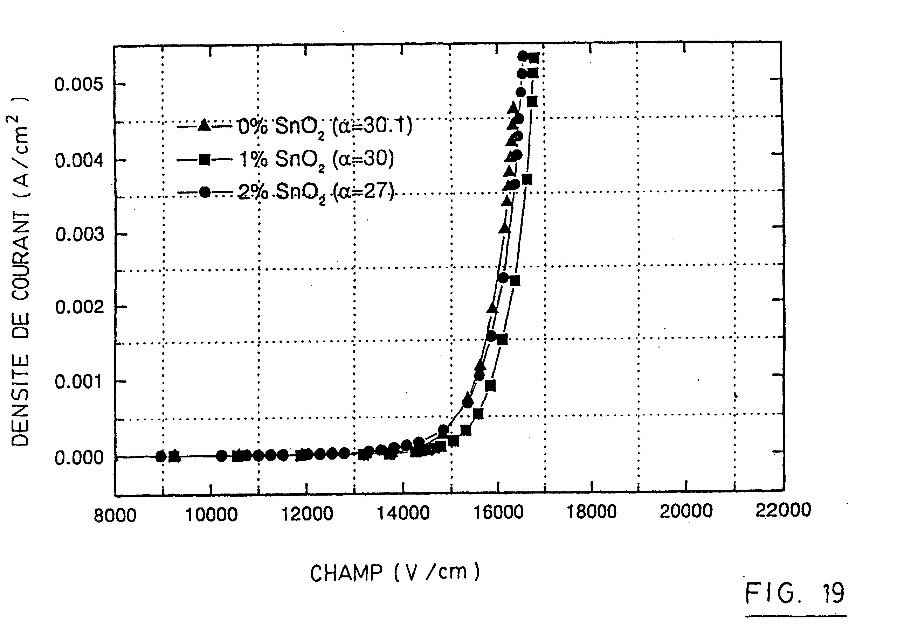

La figure 19 montre l'influence de $SnO_2$. Ces essais ont été effectués sur des varistances de type S2-1000 (1h). Comme on peut le constater, l'ajout de $SnO_2$ ne semble pas influencer la valeur de la tension de claquage. De même, le coefficient $\alpha$ ne varie que très peu. Toutefois, ces essais illustrent qu'il est possible de remplacer l'oxyde de zinc par un autre additif sans toutefois influencer les propriétés électriques des varistances.
Enfin, la figure 20 montre l'influence du $Nb_2O_5$. Ces essais ont été effectués sur une varistance de type S2-1000 (1h). Comme on peut le constater, l'ajout de $Nb_2O_5$ en quantité suffisante augmente de façon substantielle non seulement la tension de claquage mais également le coefficient $\alpha$.
Ces essais amènent la Demanderesse à croire que l'on peut aisément fabriquer des varistances très efficaces avec aussi peu que 75% mole de ZnO, la balance étant constituée de $Bi_2O_3$ et d'autres additifs performants.
Il va de soi que de nombreuses modifications ou variantes pourraient être ajoutées à ce qui vient d'être décrit et illustré sans sortir du cadre de la présente invention telle que définie dans les revendications annexées.

**Revendications**

**1.** Méthode de fabrication d'une varistance à très haute tension de claquage, du type dans laquelle:

(a) on mélange des poudres d'oxyde de zinc (ZnO) et d'oxyde de bismuth ($Bi_2O_3$) avec au moins une autre poudre d'un additif capable d'influencer les propriétés des varistances, ce mélange étant effectué avec des quantités de poudres choisies de façon à ce que l'oxyde de zinc représente au moins 75 mole % du mélange;

(b) on broie intensément lesdites poudres avant, pendant ou après leur mélange, au moyen d'un broyeur mécanique à haute énergie de façon à ce que les poudres obtenues soient nanocristallines; et

(c) on soumet le mélange ainsi broyé à un traitement de consolidation,

**caractérisée en ce que** ledit traitement de consolidation inclut un frittage et est effectué dans des conditions de température et de temps choisies de façon à conserver simultanément une taille de grains d'oxyde de zinc inférieure à 3 microns et une porosité faible, la température de frittage étant comprise entre 800 et 1200°C et le temps de traitement à ladite température de frittage étant inférieur ou égal à 2,5 heures.

2. Méthode selon la revendication 1, **caractérisée en ce que** l'étape (b) de broyage intense est effectuée après l'étape (a) de mélange des poudres.

3. Méthode selon la revendication 2, **caractérisé en ce que** préalablement au mélange de l'étape (a), la poudre d'oxyde de zinc utilisée comme produit de départ est broyée seule ou en combinaison avec un ou plusieurs agents dopants, et la poudre d'oxyde de bismuth est mélangée avec tous les autres additifs, le mélange d'oxyde de bismuth et des autres additifs ainsi obtenu étant alors broyé et traité à haute température.

4. Méthode selon la revendication 1, 2 ou 3, **caractérisée en ce que**:

(d) préalablement à la mise en oeuvre de l'étape (c), on calcine les poudres ou leur mélange à une température inférieure ou égale à 550°C.

5. Méthode selon la revendication 4, **caractérisée en ce que**:

(e) après la calcination de l'étape (d) et préalablement à la mise en oeuvre de l'étape (c), on introduit un liant dans le mélange de poudres broyées et l'on soumet le mélange dans lequel le liant a ainsi été introduit à un pressage pour former des pastilles que l'on soumet alors au traitement de l'étape (c).

6. Méthode selon la revendication 5, **caractérisée en ce que** le liant est de l'alcool polyvinylique et **en ce que** cet alcool est introduit dans le mélange de poudres par broyage mécanique.

7. Méthode selon l'une quelconque des revendications 1 à 6, **caractérisée en ce que** le traitement de consolidation de l'étape (c) est choisi dans le groupe constitué par les traitements de pressage, laminage, extrusion, tréfilage, projection et injection et inclut ou est suivi d'un chauffage.

8. Méthode selon la revendication 7, **caractérisée en ce que** le chauffage est choisi dans le groupe constitué par les chauffages à convexion, à induction, à micro-onde, au laser et par décharge électrique.

9. Méthode selon la revendication 8, **caractérisée en ce que** le chauffage est effectué en une ou plusieurs périodes de courte durée.

10. Méthode selon l'une quelconque des revendications 1 à 9, **caractérisée en ce que** le frittage est effectué à une température de l'ordre de 1000°C.

11. Méthode selon la revendication 10, **caractérisée en ce que** le frittage est effectué pendant une période de temps inférieure ou égale à 1,5 heures.

12. Méthode selon l'une quelconque des revendications 1 à 11, **caractérisée en ce que** le frittage est effectué avec un taux de chauffage compris entre 0,5 et 10°C/min.

13. Méthode selon la revendication 12, **caractérisée en ce que** le frittage effectué avec un taux de chauffage de l'ordre de 1°C/min.

14. Méthode selon l'une quelconque des revendications 1 à 13, **caractérisée en ce que** la ou les additifs capables d'influencer les propriétés des varistances sont choisis dans le groupe constitué par les oxydes, les carbures, les nitrures, les nitrates et les hydrures capables de doper les varistances, modifier les caractéristiques de leur courbe courant-tension, modifier la résistivité des phases, réduire leurs courants de fuite, augmenter leur capacité de dissipation d'énergie, contrôler leur porosité, ralentir la croissance de grain, augmenter leur intégrité structurale, altérer le point de fusion des différentes phases et améliorer leur stabilité chimique, électrique, mécanique et thermique.

15. Méthode selon la revendication 14, **caractérisée en ce que** le ou les additifs sont choisis dans le groupe constitué par les oxydes, carbures, nitrures, nitrates et hydrures des éléments suivants: Si, Sb, Mn, Ge, Sn, Pb, Nb, B, Al, Ti, Ta, Fe, S, F, Li, Ni, Cr, Mo, W, Be, Br, Ba, Co, Pr, U, As, Ag, Mg, V, Cu, C, Zr, Se, Te et Ga.

16. Méthode selon la revendication 15, **caractérisée en ce que** le ou les additifs sont choisis dans le groupe constitué par l'oxyde d'antimoine ($Sb_2O_3$), l'oxyde de manganèse ($MnO_2$), l'alumine ($Al_2O_3$), la silice ($SiO_2$), l'oxyde d'étain ($SnO_2$) , l'oxyde de niobium ($Nb_2O_5$), l'oxyde de cobalt (CoO ou $Co_3O_4$), l'oxyde de fer ($Fe_2O_3$ ou $Fe_3O_4$) et l'oxyde de titane ($TiO_2$ ou TiO).

17. Méthode selon la revendication 16, **caractérisée en ce que** le mélange préparé à l'étape (a) comprend:

de 0,25 à 10 mole % de $Bi_2O_3$
de 1,5 à 4 mole % de $Sb_2O_3$
de 0,5 à 4 mole % de MnO2
de 0,00125 à 0,05 mole % de $Al_2O_3$
de 0 à 4 mole % de $SiO_2$
de 0 à 2 mole % de $SnO_2$
de 0 à 2 mole % de $Nb_2O_5$
de 0 à 2,5 mole % de CoO
de 0 à 2,5 mole % de $Fe_2O_3$ et
de 0 à 3 mole % de $TiO_2$
la balance étant constituée de ZnO.

18. Méthode selon la revendication 17, **caractérisée en ce que**:

le mélange préparé à l'étape (a) comprend:

90,495 mole % de ZnO
3 mole % de $Bi_2O_3$
2 mole % de $Sb_2O_3$
2,5 mole % de $MnO_2$;
2 mole % de $SiO_2$
0,005 mole % de $Al_2O_3$.

19. Une varistance à base d'oxyde de zinc (ZnO) et d'oxyde de bismuth ($Bi_2O_3$), cette varistance contenant au moins 75% mole de ZnO et présentant une faible porosité et une microstructure très fine et homogène avec une taille moyenne des grains de ZnO inférieure à 3 microns, cette varistance ayant une tension de claquage supérieure à 10 kV/cm, un coefficient $\alpha$ de non-linéarité de la courbe de courant-tension supérieur à 20, un très faible courant de fuite en dessous de la tension de claquage et étant **caractérisée en ce qu'**elle est fabriquée par la méthode selon l'une quelconque des revendications 1 à 18.

20. Varistance selon la revendication 19, **caractérisée en ce qu'**elle se présente sous forme d'une pastille.

21. Varistance selon la revendication 19 ou 20, **caractérisée en ce que** son coefficient $\alpha$ de non-linéarité de la courbe de courant-tension est supérieur à 40.

22. Varistance selon la revendication 21, **caractérisée en ce que** son coefficient $\alpha$ est supérieur à 60.

23. Varistance selon l'une quelconque des revendications 19 à 22, **caractérisée en ce qu'**elle contient au moins une autre poudre choisie dans le groupe constitué par les oxydes, les carbures, les nitrures, les nitrates et les hydrures capables de doper les varistances, modifier leurs caractéristiques de la courbe courant-tension, modifier la résistivité des phases, réduire leurs courants de fuite, augmenter leur capacité de dissipation d'énergie, contrôler la porosité, ralentir la croissance de grain, augmenter leur intégrité structurale, altérer le point de fusion des différentes phases et améliorer leur stabilité chimique, électrique, mécanique et thermique.

**24.** Varistance selon la revendication 23, **caractérisée en ce que** les autres poudres sont choisies dans le groupe constitué par les oxydes, carbures, nitrures, nitrates ou les hydrures des éléments suivants: Si, Sb, Mn, Ge, Sn, Pb, Nb, B, Al, Ti, Ta, Fe, S, F, Li, Ni, Cr, Mo, W, Be, Sr, Ba, Co, Pr, U, As, Ag, Mg, V, Cu, C, Zr, Se, Te et Ga.

**25.** Varistance selon la revendication 24, **caractérisée en ce que** les autres poudres sont choisies dans le groupe constitué par l'oxyde d'antimoine ($Sb_2O_3$), l'oxyde de manganèse ($MnO_2$), l'alumine ($Al_2O_3$), la silice ($SiO_2$), l'oxyde d'étain ($SnO_2$), l'oxyde de niobium ($Nb_2O_5$), l'oxyde de cobalt (CoO ou $Co_3O_4$), l'oxyde de fer ($Fe_2O_3$ ou $Fe_3O_4$) et l'oxyde de titane ($TiO_2$ ou TiO).

**26.** Varistance selon la revendication 25, **caractérisée en ce qu'**elle comprend:

de 0,25 à 10 mole % de $Bi_2O_3$
de 1,5 à 4 mole % de $Sb_2O_3$
de 0,5 à 4 mole % de $MnO_2$
0,00125 à 0,005 mole % de $Al_2O_3$
de 0 à 4 mole % de $SiO_2$
de 0 à 2 mole % de $SnO_2$
de 0 à 2 mole % de $Nb_2O_5$
de 0 à 2,5 mole % de CoO
de 0 à 2,5 mole % de $Fe_2O_3$; et
de 0 à 3 mole % de $TiO_2$
la balance étant constituée de ZnO.

**27.** Varistance selon la revendication 26, **caractérisée en ce qu'**elle comprend:

90,495 mole % de ZnO
3 mole % de $Bi_2O_3$
2 mole % de $Sb_2O_3$
2,5 mole % de $MnO_2$;
2 mole % de $SiO_2$; et
0,005 mole % de $Al_2O_3$.

**Patentansprüche**

**1.** Verfahren zur Herstellung eines Varistors mit sehr hoher Durchbruchspannung, mit folgenden Schritten:

a) Zinkoxydpulver (ZnO) und Wismutoxydpulver ($Bi_2O_3$) werden mit mindestens einem weiteren Pulver eines Additivs gemischt, das in der Lage ist, die Eigenschaften der Varistoren zu beeinflussen; die Mischung wird mit solchen Anteilen der gewählten Pulver ausgeführt, dass das Zinkoxyd mindestens 75 Mol-% der Mischung ausmacht;
b) die Pulver werden vor, während oder nach ihrer Mischung intensiv zermahlen, und zwar mittels einer mechanischen Mühle hoher Energie, damit die erhaltenen Pulver nanokristallin seien;
c) die Mahl-Mischung wird einer Verfestigungsbehandlung unterworfen,

**dadurch gekennzeichnet, dass** die Verfestigungsbehandlung ein Sintern umfasst und mit so ausgewählten Temperatur- und Zeitbedingungen ausgeführt wird, dass gleichzeitig eine Größe der Zinkoxydkörner kleiner 3 Micron und eine geringe Porosität erhalten werden, wobei die Sintertemperatur zwischen 800°C und 1200°C liegt und die Behandlungszeit bei dieser Temperatur der Sinterung kleiner 2,5 Stunden beträgt.

**2.** Verfahren nach Anspruch 1,
**dadurch gekennzeichnet, dass** der Schritt b) der intensiven Zermahlung nach dem Schritt a) der Mischung der Pulver ausgeführt wird.

**3.** Verfahren nach Anspruch 1,
**dadurch gekennzeichnet, dass** vor der Mischung nach Schritt a) das Zinkoxydpulver, welches als Ausgangsmaterial verwendet wird, allein oder in Kombination mit einem oder mehreren Dotierungsmitteln zermahlen wird und dass das Wismutoxydpulver mit sämtlichen anderen Additiven vermischt wird, die so erhaltene Mischung von Wismutoxyd und den anderen Zusätzen danach zermahlen wird und bei hoher Temperatur behandelt wird.

4. Verfahren nach Anspruch 1, 2 oder 3,
   **dadurch gekennzeichnet, dass**

   d) vor der Ausführung des Schrittes c) die Pulver oder deren Mischung bei einer Temperatur unterhalb oder gleich 550°C geröstet oder kalziniert werden.

5. Verfahren nach Anspruch 4,
   **dadurch gekennzeichnet, dass**

   e) nach der Kalzinierung gemäß Schritt d) und vor der Durchführung des Schrittes c) in die Mischung der zermahlenen Pulver ein Bindemittel eingeführt wird, und dass die Mischung mit dem so zugeführten Bindemittel einer Verpressung unterworfen wird, um Pellets oder Tablette zu formen, die anschließend der Behandlung nach Schritt c) unterworfen werden.

6. Verfahren nach Anspruch 5,
   **dadurch gekennzeichnet, dass** das Bindemittel aus Polyvynylalkohol besteht oder enthält und dass dieser Alkohol in die Pulvermischung durch mechanisches Zermahlen eingeführt wird.

7. Verfahren nach einem der Ansprüche 1 bis 6,
   **dadurch gekennzeichnet, dass** die Verfestigungsbehandlung nach Schritt c) aus der Gruppe ausgewählt wird, die durch folgende Behandlungen gebildet wird: Verpressen, Walzen, Extrudieren, Ziehen, Spitzen und Injizieren, und dass der Verfestigungsschritt eine Wärmebehandlung einschließt oder eine solche nachfolgt.

8. Verfahren nach Anspruch 7,
   **dadurch gekennzeichnet, dass** die Wärmebehandlung aus der Gruppe ausgewählt wird, die aus Aufheizung durch Konvektion, durch Induktion, durch Mikrowelle, durch Laserbestrahlung und durch elektrische Entladung gebildet wird.

9. Verfahren nach Anspruch 8,
   **dadurch gekennzeichnet, dass** die Aufheizung durch eine oder mehrere Perioden kurzer Dauer bewirkt wird.

10. Verfahren nach einem der Ansprüche 1 bis 9,
    **dadurch gekennzeichnet, dass** die Sinterung bei einer Temperatur in der Größenordnung von 1000°C ausgeführt wird.

11. Verfahren nach Anspruch 10,
    **dadurch gekennzeichnet, dass** die Sinterung während einer Zeitperiode unterhalb oder gleich 1,5 Stunden ausgeführt wird.

12. Verfahren nach einem der Ansprüche 1 bis 11,
    **dadurch gekennzeichnet, dass** die Sinterung mit einer Aufheizgeschwindigkeit bewirkt wird, die zwischen 0,5 und 10°C/min beträgt.

13. Verfahren nach Anspruch 12,
    **dadurch gekennzeichnet, dass** die Sinterung mit einer Aufheizgeschwindigkeit in der Größenordnung von 1°C/min ausgeführt wird.

14. Verfahren nach einem der Ansprüche 1 bis 13,
    **dadurch gekennzeichnet, dass** die zur Beeinflussung der Eigenschaften der Varistoren geeigneten Additive aus der Gruppe ausgewählt sind, die aus solchen Oxyden, Karbiden, Nitriden, Nitraten und Hydriden gebildet wird, die in der Lage sind, die Varistoren zu dotieren, deren Charakteristiken hinsichtlich Strom-Spannungskurve zu modifizieren, den spezifischen elektrischen Widerstand gegenüber Phasen zu modifizieren, den Verluststrom zu reduzieren, die Fähigkeit der Ableitung von Energie zu vergrößern, die Porosität zu steuern, das Kornwachstum zu verlangsamen, die strukturelle Integrität zu vergrößern, den Schmelzpunkt der unterschiedlichen Phasen zu ändern und ihre chemische, elektrische, mechanische und thermische Stabilität zu verbessern.

**15.** Verfahren nach Anspruch 14,
**dadurch gekennzeichnet, dass** das oder die Additive aus der Gruppe ausgewählt sind, die besteht aus den Oxyden Karbiden, Nitriden, Nitraten und Hydriden der folgenden Elemente: Si, Sb, Mn, Ge, Sn, Pb, Nb, B, Al, Ti, Ta, Fe, S, F, Li, Ni, Cr, Mo, W, Be, Br, Ba, Co, Pr, U, As, Ag, Mg, V, Cu, C, Zr, Se, Te und Ga.

**16.** Verfahren nach Anspruch 15,
**dadurch gekennzeichnet, dass** das oder die Additive aus der Gruppe ausgewählt sind, die besteht aus Antimon-oxyd ($Sb_2O_3$), Manganoxyd ($MnO_2$), Aluminiumoxyd ($Al_2O_3$), Siliciumoxyd ($SiO_2$), Zinnoxyd ($SnO_2$), Nioboxyd ($Nb_2O_5$), Kobaltoxyd (CoO oder $Co_3O4$), Eisenoxyd ($Fe_2O_3$ oder $Fe_3O_4$) und Titanoxyd ($TiO_2$ oder TiO).

**17.** Verfahren nach Anspruch 16,
**dadurch gekennzeichnet, dass** die in Schritt a) hergestellte Mischung umfasst:

von 0,25 bis 10 Mol-% $Bi_2O_3$,
von 1,5 bis 4 Mol-% $Sb_2O_3$,
von 0,5 bis 4 Mol-% $MnO_2$,
von 0,00125 bis 0,05 Mol-% $Al_2O_3$,
von 0 bis 4 Mol-% $SiO_2$,
von 0 bis 2 Mol-% $SnO_2$,
von 0 bis 2 Mol-% $Nb_2O_5$,
von 0 bis 2,5 Mol-% CoO,
von 0 bis 2,5 Mol-% $Fe_2O_3$ und
von 0 bis 3 Mol-% $TiO_2$,

wobei der Rest durch ZnO gebildet wird.

**18.** Verfahren nach Anspruch 17,
**dadurch gekennzeichnet, dass** die in Schritt a) hergestellte Mischung umfasst:

90,495 Mol-% ZnO,
3 Mol-% $Bi_2O_3$,
2 Mol-% $Sb_2O_3$,
2,5 Mol-% $MnO_2$,
2 Mol-% $SiO_2$,
0,005 Mol-% $Al_2O_3$.

**19.** Varistor auf der Basis von Zinkoxyd (ZnO) und Wismutoxyd ($Bi_2O_3$), wobei der Varistor mindestens 75 Mol-% ZnO enthält und eine schwache Porosität sowie eine sehr feine und homogene Mikrostruktur aufweist mit einer mittleren Größe der Körner von ZnO unterhalb von 3 Micron, wobei der Varistor eine Durchbruchsspannung oberhalb von 10 kV/cm aufweist, einen Koeffizienten $\alpha$, der Nichtlinearität der Strom-Spannungskurve oberhalb von 20 aufweist, einen sehr schwachen Verluststrom unterhalb der Durchbruchsspannung besitzt und **dadurch gekennzeichnet ist, dass** er nach dem Verfahren nach einem der Ansprüche 1 bis 18 hergestellt worden ist.

**20.** Varistor nach Anspruch 19,
**dadurch gekennzeichnet, dass** er in Form einer Tablette vorliegt.

**21.** Varistor nach Anspruch 19 oder 20,
**dadurch gekennzeichnet, dass** der Koeffizient $\alpha$ der Nichtlinearität der Strom-Spannungskurve oberhalb von 40 liegt.

**22.** Varistor nach Anspruch 21,
**dadurch gekennzeichnet, dass** der Koeffizient $\alpha$ oberhalb 60 liegt.

**23.** Varistor nach einem der Ansprüche 19 bis 22,
**dadurch gekennzeichnet, dass** er mindestens ein weiteres Pulver enthält, welches aus der Gruppe ausgewählt ist, welche durch solche Oxyde, Karbide, Nitride, Nitrate und Hydride gebildet wird, die in der Lage sind, die Varistoren zu dotieren, ihre Eigenschaften hinsichtlich Strom-Spannungskurve zu modifizieren, den spezifischen Widerstand der Phasen zu modifizieren, die Verlustströme zu verringern, die Fähigkeit der Ableitung von Energie zu vergrößern, die Porosität zu steuern, das Kornwachstum zu verlangsamen, die strukturelle Integrität zu vergrößern, den Schmelzpunkt der verschiedenen Phasen zu verändern und die chemische, elektrische, mechanische und thermische Stabilität zu verbessern.

**24.** Varistor nach Anspruch 23,
**dadurch gekennzeichnet, dass** die weiteren Pulver aus der Gruppe ausgewählt sind, die gebildet wird durch die Oxyde, Karbide, Nitride, Nitrate oder die Hydride der folgenden Elemente: Si, Sb, Mn, Ge, Sn, Pb, Nb, B, Al, Ti, Ta, Fe, S, F, Li, Ni, Cr, Mo, W, Be, Sr, Ba, Co, Pr, U, As, Ag, Mg, V, Cu, C, Zr, Se, Te und Ga.

**25.** Varistor nach Anspruch 24,
**dadurch gekennzeichnet, dass** die anderen Pulver aus der Gruppe ausgewählt sind, die gebildet wird durch Antimonoxyd ($Sb_2O_3$), Manganoxyd ($MnO_2$), Aluminiumoxyd ($Al_2O_3$), Siliciumoxyd ($SiO_2$), Zinnoxyd ($SnO_2$), Nioboxyd ($Nb_2O_5$), Kobaltoxyd (CoO oder $Co_3O4$), Eisenoxyd ($Fe_2O_3$ oder $Fe_3O_4$) und Titanoxyd ($TiO_2$ oder TiO) .

**26.** Varistor nach Anspruch 25,
**dadurch gekennzeichnet, dass** er umfasst:

von 0,25 bis 10 Mol-% $Bi_2O_3$,
von 1,5 bis 4 Mol-% $Sb_2O_3$,
von 0,5 bis 4 Mol-% $MnO_2$,
von 0,00125 bis 0,05 Mol-% $Al_2O_3$,
von 0 bis 4 Mol-% $SiO_2$,
von 0 bis 2 Mol-% $SnO_2$,
von 0 bis 2 Mol-% $Nb_2O_5$,
von 0 bis 2,5 Mol-% CoO,
von 0 bis 2,5 Mol-% $Fe_2O_3$ und
von 0 bis 3 Mol-% $TiO_2$,

wobei der Rest durch ZnO gebildet wird.

**27.** Varistor nach Anspruch 26,
**dadurch gekennzeichnet, dass** er umfasst:

90,495 Mol-% ZnO,
3 Mol-% $Bi_2O_3$,
2 Mol-% $Sb_2O_3$,
2,5 Mol-% $MnO_2$,
2 Mol-% $SiO_2$, und
0,005 Mol-% $Al_2O_3$.

**Claims**

**1.** A method for the manufacture of a varistor having a very high breakdown voltage, of the type comprising:

(a) mixing powders of zinc oxide (ZnO) and bismuth oxide ($Bi_2O_3$) with at least one other powder of an additive capable of influencing the properties of the varistance, said mixing being carried with amounts of powders selected so that the zinc oxide represents at least 75 mol % of the mixture;
(b) subjecting said powders to an intensive milling before, during or after their mixing, by means of a high energy ball mill in such a manner that the obtained powders be nanocrystalline; and
(c) subjecting the so milled mixture to a consolidation treatment

**characterized in that** said consolidation treatment includes a sintering and is carried out under time and temperature conditions selected to keep a zinc oxide grain size lower than 3µm and a low porosity, the sintering temperature ranging between 800 and 1,200°C and the sintering time at such a sintering temperature being equal to or lower than 2,5 hours.

**2.** The method according to claim 1, **characterized in that** the intensive milling of step (b) is carried out after the powder mixing step (a).

3.  The method according to claim 2, **characterized in that** before the mixing of step (a), the zinc oxide powder used as a starting material is milled either alone or in combination with one or more doping agents, and the powder of bismuth oxide is mixed with all the other additives, the so-obtained mixture of bismuth oxide with the other additives being then milled and processed at a high temperature.

4.  The method according to claim 1, 2 or 3, **characterized in that**:

    (d) before carrying out step (c) the powders or their mixture are calcinated at a temperature equal to or lower than 550°C.

5.  The method according to claim 4, **characterized in that**:

    (e) after the calcination of the step (d) and before carrying out step (c), a binder is introduced into the mixture of milled powders and the obtained mixture wherein the binder has been introduced, is subjected to a pressing to form pellets that are then subjected to the consolidation treatment of step (c).

6.  The method according to claim 5, **characterized in that** the binder is polyvinyl alcohol and this alcohol is introduced into the mixture of powders by ball milling.

7.  The method according to any one of claims 1 to 6, **characterized in that** the consolidation treatment of step (c) is selected from the group consisting of pressing, rolling, extension, wire-drawing, plasma-spray, injection, and includes or is followed by a heating.

8.  The method according to claim 7, **characterized in that** the heating is selected from the group consisting of convection heating, induction heating, microwave heating, laser heating and electric discharge heating.

9.  The method according to claim 8, **characterized in that** the heating is carried out for one or several short periods of time.

10. The method according to any one of claims 1 to 9, **characterized in that** the sintering is carried out at a temperature lower than 1,000°C.

11. The method according to claim 10, **characterized in that** the sintering is carried out for a period of time equal to or lower than 1.5 hours.

12. The method according to claim 10 or 11, **characterized in that** the sintering is carried out at a heating rate comprised between 0.5 and 10°C/min.

13. The method according to claim 12, **characterized in that** the sintering is carried out at a heating rate of about 1°C/min.

14. The method according to any one of claims 1 to 13, **characterized in that** the additive(s) capable of influencing the properties of the varistors, is (are) selected from the group consisting of metal oxides, carbides, nitrides, nitrates and hydrides that are capable of doping the varistors, modifying the characteristics of their current-voltage curve, modifying the resistivity of phases, reducing their leakage current, increasing their capacity of dissipating energy, controlling their porosity, slowing down the grain of growth, increasing their structural integrity, altering the melting points of the phases and increasing their chemical, electrical, mechanical and thermal stabilities.

15. The method according to claim 14, **characterized in that** the additive(s) is (are) selected from the group consisting of metal oxides, carbides, nitrides, nitrates and hydrides of the following elements: Si, Sb, Mn, Ge, Sn, Pb, Nb, B, Al, Ti, Ta, Fe, S, F, Li, Ni, Cr, Mo, W, Be, Br, Ba, Co, Pr, U, As, Ag, Mg, V, Cu, C, Zr, Se, Te and Ga.

16. The method according to claim 15, **characterized in that** said at the additive(s) is (are) selected from the group consisting of antimony oxide ($Sb_2O_3$), manganese oxide ($MnO_2$), alumina ($Al_2O_3$), silica ($SiO_2$) tin oxide ($SnO_2$), niobium oxide ($Nb_2O_5$) cobalt oxide (CoO or $Co_3O_4$), iron oxide ($Fe_2O_3$ or $Fe_3O_4$) and titanium oxide ($TiO_2$ or TiO).

**17.** The method according to claim 16, **characterized in that** the mixture prepared during step (a) comprises:

from 0.25 to 10 mol % $Bi_2O_3$
from 1.5 to 4 mol % $Sb_2O_3$
from 0.5 to 4 mol % $MnO_2$
from 0.00125 to 0.05 mol % $Al_2O_3$
from 0 to 4 mol % of $SiO_2$
from 0 to 2 mol % $SnO_2$
from 0 to 2 mol % $Nb_2O_5$
from 0 to 2 mol % $Nb_2O_5$
from 0 to 2.5 mol % CoO
from 0 to 2.5 mol % $Fe_2O_3$ and
from 0 to 3 mol % $TiO_2$
the balance consisting of ZnO.

**18.** The method according to claim 17, **characterized in that** the mixture prepared in step (a) comprises:

90.495 mol % ZnO
3 mol % $Bi_2O_3$
2 mol % $Sb_2O_3$
2.5 mol % $MnO_2$
2 mol % $SiO_2$
0.005 mol % $Al_2O_3$

**19.** A varistor containing zinc oxide (ZnO) and bismuth oxide ($Bi_2O_3$), said varistor containing at least 75 mol % ZnO and having a low porosity and a very fine and homogeneous microstructure with an average ZnO grain size lower than 3 microns, said varistor having a breakdown voltage higher than 10 kV/cm, a coefficient of non-linearity of current-voltage higher than 20 and a very small leakage current below its breakdown voltage, said varistor being **characterized in that** it is manufactured by the method according to any one of claims 1 to 18.

**20.** The varistor according to claim 19, **characterized in that** it is in the form of a pellet.

**21.** The varistor according to claim 19 or 20, **characterized in that** its coefficient of non-linearity of current-voltage is higher than 40.

**22.** The varistor according to claim 21, **characterized in that** its coefficient of non-linearity is higher than 60.

**23.** The varistor according to any one of claims 19 to 22, **characterized in that** it comprises at least one other power selected from the group consisting of metal oxides, carbides, nitrides, nitrates and hydrides that are capable of doping the varistors, modifying the characteristics of their current-voltage curves, modifying the resistivity of phases, reducing their leakage current, increasing their capacity of dissipating energy, controlling their porosity, slowing down the grain growth, increasing their structural integrity, altering the melting points of the phases and increasing their chemical, electrical, mechanical and thermal stabilities.

**24.** The varistor according to claim 23, **characterized in that** the other powders are selected from the group consisting of metal oxides, carbides, nitrides, nitrates and hydrides of the following elements: Si, Sb, Mn, Ge, Sn, Pb, Nb, B, Al, Ti, Ta, Fe, S, F, Li, Ni, Cr, Mo, W, Be, Br, Ba, Co, Pr, U, As, Ag, Mg, V, Cu, C, Zr, Se, Te and Ga.

**25.** The varistor according to claim 24, **characterized in that** the other powders are selected from the group consisting of antimony oxide ($Sb_2O_3$), manganese oxide ($MnO_2$), alumina ($Al_2O_3$), silica ($SiO_2$) tin oxide ($SnO_2$), niobium oxide ($Nb_2O_5$) cobalt oxide (CoO or $Co_3O_4$) ,iron oxide ($Fe_2O_3$ or $Fe_3O_4$) and titanium oxide ($TiO_2$ or TiO).

**26.** The varistor according to claim 25, **characterized in that** it comprises

from 0.25 to 10 mol % $Bi_2O_3$
from 1.5 to 4 mol % $Sb_2O_3$
from 0.5 to 4 mol % $MnO_2$
from 0.00125 to 0.005 mol % $Al_2O_3$

from 0 to 4 mol % of SiO$_2$
from 0 to 2 mol % SnO$_2$
from 0 to 2 mol % Nb$_2$O$_5$
from 0 to 2.5 mol % CoO
from 0 to 2.5 mol % Fe$_2$O$_3$ and
from 0 to 3 mol % TiO$_2$
the balance consisting of ZnO.

**27.** The varistor according to claim 26, **characterized in that** it comprises :

90.495 mol % ZnO
3 mol % Bi$_2$O$_3$
2 mol % Sb$_2$O$_3$
2.5 mol % MnO$_2$
2 mol % SiO$_2$; and
0.005 mol % Al$_2$O.

FIG. 1

FIG. 2a

FIG. 2b (ART ANTERIEUR)

S2 - 1000 (2,5 h)

$\alpha = 44,74$

densite de courant (A/cm$^2$)

champ (v/cm)

FIG. 3a

SEDIVER

$\alpha = 45,24$

densite de courant (A/cm$^2$)

champ (v/cm)

FIG. 3b (ART ANTERIEUR)

FIG. 4

FIG. 5

FIG. 6

EP 1 010 186 B1

S2-1000 (1h)

FIG. 7

S2 − 1000 ( 2h )

FIG. 8

S 2-1000 ( 2h )

FIG. 9

S2 - 1000 ( 2,5 h )

2% SiO₂, 1000°C, 2000X

FIG. 10

S2 - 1200 ( 2,5 h )

2% SiO₂, 1200°C, 2000X

FIG. 11

FIG. 12

FIG. 13

EP 1 010 186 B1

FIG. 14

EP 1 010 186 B1

FIG. 15

FIG. 16

EP 1 010 186 B1

FIG. 17

FIG. 18

EP 1 010 186 B1

FIG. 19

EP 1 010 186 B1

FIG. 20

EP 1 010 186 B1